# EUROPEAN PATENT APPLICATION

(11) **EP 4 723 200 A1**
(43) Date of publication of application: **08.04.2026**
(21) Application number: 24909553.0
(22) Date of filing: 03.06.2024
(51) Int. Cl.: H01M 4/131, H01M 4/02

(54) **POSITIVE ELECTRODE FILM, POSITIVE ELECTRODE FILM SHEET, SOLID-STATE BATTERY, ELECTRIC DEVICE, AND APPLICATION**

(30) Priority: 28.12.2023 CN 202311843888
(71) Applicant: Contemporary Amperex Technology Co., Limited, Ningde, Fujian 352100 (CN)
(72) Inventor: SHAO, Qinong, Ningde, Fujian 352100 (CN); YANG, Dunjie, Ningde, Fujian 352100 (CN); WENG, Wei, Ningde, Fujian 352100 (CN); YANG, Wu, Ningde, Fujian 352100 (CN); ZHONG, Chengbin, Ningde, Fujian 352100 (CN); NING, Ziyang, Ningde, Fujian 352100 (CN); HU, Bobing, Ningde, Fujian 352100 (CN)
(74) Representative: Gong, Jinping
(86) International application number: PCT/CN2024/097070
(87) International publication number: WO 2025/138589

(57) **Abstract**

A positive electrode film, a positive electrode film sheet, a solid-state battery, an electric apparatus, and applications thereof are provided. The positive electrode film includes a positive electrode active material layer, the positive electrode active material layer including a positive electrode active substance, a positive electrode solid electrolyte, and a conductive agent; where the positive electrode active substance includes an oxide positive electrode active substance, and the conductive agent includes a non-carbon conductive substance, the non-carbon conductive substance including at least one of elemental Se, elemental Te, and a Se/Te composite SeₓTe₁₋ₓ, where 0 < x < 1.

## Description

### RELATED APPLICATIONS

This application claims priority to Chinese Patent Application No. CN2023118438880, filed on December 28, 2023 and entitled "POSITIVE ELECTRODE FILM, POSITIVE ELECTRODE FILM SHEET, ALL-SOLID-STATE BATTERY, ELECTRIC APPARATUS, AND APPLICATION", which is incorporated herein by reference in its entirety.

### TECHNICAL FIELD

This application relates to the field of solid-state battery technology, and in particular, to the field of all-solid-state battery technology, and further to a positive electrode film, a positive electrode film sheet, a solid-state battery, an electric apparatus, and an application thereof, where the solid-state battery includes an all-solid-state battery.

### BACKGROUND

The statements herein merely provide background information related to this application and do not necessarily constitute the prior art.

Solid-state batteries employ non-flammable solid electrolytes to replace organic liquid electrolytes used in conventional liquid secondary batteries, significantly enhancing battery safety and positioning them as the next-generation batteries closest to industrialization. An all-solid-state battery is a solid-state battery that utilizes solid electrodes and a solid electrolyte. All-solid-state batteries replace the liquid electrolyte in conventional batteries with a solid electrolyte, and the solid electrolyte can also serve to separate the positive electrode and negative electrode, eliminating the need for a separator. Given the advantages of all-solid-state batteries in terms of safety and energy density, all-solid-state batteries have garnered significant attention in recent years. However, in solid-state batteries (for example, all-solid-state batteries), poor interface contact and interface side reactions are among the key challenges limiting their performance, resulting in suboptimal discharge capacity, rate performance, and cycling performance.

### SUMMARY

According to various implementations and embodiments of this application, this application provides a positive electrode film, a positive electrode film sheet, a solid-state battery, an electric apparatus, and an application thereof, where the solid-state battery includes an all-solid-state battery. The positive electrode film can be used as a positive electrode film sheet to prepare a solid-state battery (for example, an all-solid-state battery) with high discharge capacity, high rate performance, and good cycling performance, or as a positive electrode film layer in a solid-state battery (for example, an all-solid-state battery).

According to a first aspect, this application provides a positive electrode film including a positive electrode active material layer, the positive electrode active material layer including a positive electrode active substance, a positive electrode solid electrolyte, and a positive electrode conductive agent;
where the positive electrode active substance includes an oxide positive electrode active substance, and the positive electrode conductive agent includes a non-carbon conductive substance, the non-carbon conductive substance including at least one of elemental Se, elemental Te, and a Se/Te composite, the Se/Te composite having a chemical formula of SeₓTe₁₋ₓ, where 0 < x < 1. In some embodiments, the oxide positive electrode active substance includes a lithium transition metal oxide.

In some embodiments, a positive electrode film is provided, including a positive electrode active material layer, the positive electrode active material layer including a positive electrode active substance, a positive electrode solid electrolyte, and a positive electrode conductive agent;
where the positive electrode active substance includes a lithium transition metal oxide, and the positive electrode conductive agent includes a non-carbon conductive substance, the non-carbon conductive substance including at least one of elemental Se, elemental Te, and a Se/Te composite, the Se/Te composite having a chemical formula of SeₓTe₁₋ₓ, where 0 < x < 1.

The positive electrode film adopts a composite positive electrode configuration, including a positive electrode active substance, a solid electrolyte (also referred to as a positive electrode solid electrolyte), and a conductive agent (also referred to as a positive electrode conductive agent). The addition of the solid electrolyte and the conductive agent can respectively enhance the ionic conduction capability and electronic conduction capability on the positive electrode side, promoting efficient charge transfer between the positive electrode active substance and the external environment and full capacity release. The positive electrode conductive agent can improve the electronic conduction capability within the positive electrode film, thereby enhancing the discharge capacity and rate performance of the battery. The non-carbon conductive substance introduced into the positive electrode conductive agent includes a first conductive substance, the first conductive substance being at least one of elemental Se, elemental Te, and a Se/Te composite, composed of one or both of element selenium (Se) and element tellurium (Te). Both elemental Se and elemental Te exhibit high electronic conductivity, where elemental Se has an electronic conductivity of approximately 10 mS/cm, and elemental Te has an electronic conductivity of approximately 2000 mS/cm, enabling the non-carbon conductive substance to serve as a conductive material in the positive electrode film and provide favorable electronic conduction capability. Additionally, within the electrochemical operating window of the oxide positive electrode active substance (for example, a lithium transition metal oxide), selenium (Se) and tellurium (Te) exhibit almost no electrochemical activity, essentially not participating in electrochemical reactions, thereby maintaining stable electronic conduction capability. When a non-carbon conductive substance is introduced as the conductive agent, peroxide ions (O₂²⁻) or oxygen radicals generated during charging to a high voltage can react with Se and/or Te in the non-carbon conductive substance to generate SeO₃²⁻ and/or TeO₃²⁻. This reaction can suppress oxygen release from the oxide positive electrode active substance (for example, a lithium transition metal oxide), enhancing the structural stability of the positive electrode active substance and the electrochemical performance of the battery. Therefore, introduction of a non-carbon conductive substance into the positive electrode film allows the prepared solid-state battery (for example, an all-solid-state battery) to achieve high discharge capacity, high rate performance, and good cycling performance at the same time.

Through the multiple synergistic effects among the oxide positive electrode active substance (for example, a lithium transition metal oxide), the positive electrode solid electrolyte, and the non-carbon conductive substance, a robust and stable electrical contact network can be formed in the positive electrode film. This reduces interface impedance, and promotes efficient charge transfer between the positive electrode active substance and the external environment and full capacity release, facilitating preparation of a solid-state battery (for example, an all-solid-state battery) with high discharge capacity, high rate performance, and good cycling performance.

Based on any suitable embodiment of this application, in some embodiments, under at least one temperature or within at least a portion of a temperature range from 20°C to 100°C, under identical test conditions, an electronic conductivity of the non-carbon conductive substance is greater than or equal to an electronic conductivity of elemental Se; and
optionally, at any temperature or within any temperature range from 20°C to 100°C, under identical test conditions, the electronic conductivity of the non-carbon conductive substance is greater than or equal to the electronic conductivity of elemental Se.

In addition to a first conductive agent, the positive electrode conductive agent may further include other non-carbon conductive substances with favorable electronic conductivity. For example, the other non-carbon conductive substances may be non-carbon conductive substances that has an electronic conductivity superior to that of elemental Se or substantially equivalent to that of elemental Se under certain temperature conditions.

Based on any suitable embodiment of this application, in some embodiments, a weight percentage of element Te in the non-carbon conductive substance is 50wt% to 100wt%, optionally 60wt% to 100wt%.

Elemental Te has a relatively high electronic conductivity (approximately 2000 mS/cm), comparable in magnitude to the electronic conductivity of conventional carbon black materials (for example, an electronic conductivity of carbon black is approximately 10 S/cm to 100 S/cm), providing excellent electronic conduction capabilities. Incorporating a higher proportion of element Te in the non-carbon conductive substance helps to reduce the amount of the conductive agent and non-carbon conductive substance used in the positive electrode film, which is beneficial for increasing the energy density of the battery.

Based on any suitable embodiment of this application, in some embodiments, the "at least one of elemental Se, elemental Te, and a Se/Te composite" is denoted as a first conductive substance, and a weight percentage of the first conductive substance in the non-carbon conductive substance is 80wt% to 100wt%.

Through control over the weight percentage of the first conductive substance in the non-carbon conductive substance, the first conductive substance can more effectively suppress oxygen release from the oxide positive electrode active substance (for example, a lithium transition metal oxide), facilitating the preparation of a solid-state battery (for example, an all-solid-state battery) with higher discharge capacity, higher rate performance, and better cycling performance.

Based on any suitable embodiment of this application, in some embodiments, Dᵥ50 of the non-carbon conductive substance is 1 nm to 20 µm, optionally 10 nm to 5 µm, further optionally 10 nm to 1 µm; where Dᵥ50 represents a particle size at which a cumulative volume distribution percentage of a multi-particle mixture reaches 50%.

The particle size of the non-carbon conductive substance is controlled within the above range, which is conducive to improving the overall electronic conduction capability of the non-carbon conductive substance and providing a better electrical contact network while balancing manufacturing costs. A relatively small particle size of the non-carbon conductive substance facilitates enhanced electrical contact between positive electrode active substances within the electrode film, thereby promoting the capacity and rate performance of the solid-state battery (for example, an all-solid-state battery). A relatively moderate particle size of the non-carbon conductive substance is easier to manufacture.

Based on any suitable embodiment of this application, in some embodiments, a weight percentage of the non-carbon conductive substance in the positive electrode active material layer is 0.1wt% to 10wt%, optionally 0.5wt% to 5wt%.

The weight percentage of the non-carbon conductive substance in the positive electrode active material layer is controlled, which is more conducive to forming a robust and stable electrical contact network and reducing interface impedance while enhancing the structural stability of the positive electrode active substance, thereby allowing the solid-state battery (for example, an all-solid-state battery) to achieve high discharge capacity, high rate performance, and good cycling performance.

Based on any suitable embodiment of this application, in some embodiments, the positive electrode solid electrolyte includes a sulfide solid electrolyte.

The sulfide solid electrolyte possesses excellent ionic conduction capability, better promoting efficient charge transfer between the positive electrode active substance and the external environment and full capacity release. Selenium (Se) and tellurium (Te) are in the same group as sulfur (S), resulting in good compatibility between the non-carbon conductive substance and the sulfide solid electrolyte. Additionally, the absence of oxygen-containing functional groups on the surface of the non-carbon conductive substance can reduce side reactions between the non-carbon conductive substance and the sulfide solid electrolyte, which is beneficial for reducing interface impedance.

When charged to a high voltage, the oxide positive electrode active substance (for example, a lithium transition metal oxide) may generate oxygen, which can attack the sulfide solid electrolyte, leading to decomposition of the sulfide solid electrolyte. When a sulfide solid electrolyte without a non-carbon conductive substance is introduced into the positive electrode of a solid-state battery using an oxide positive electrode active substance (for example, the positive electrode of an all-solid-state battery using a lithium transition metal oxide), the oxidative decomposition of the sulfide solid electrolyte can easily increase interface impedance, adversely affecting discharge capacity and resulting in suboptimal electrochemical performance of the battery. The introduction of a non-carbon conductive substance can suppress the oxidative decomposition of the sulfide solid electrolyte at high voltages, fully leveraging the superior ionic conduction function of the sulfide solid electrolyte. Through the multiple synergistic effects among the oxide positive electrode active substance (for example, a lithium transition metal oxide), the sulfide solid electrolyte, and the non-carbon conductive substance, a better and more stable electrical contact network can be formed in the positive electrode film. This further reduces interface impedance, and further promotes efficient charge transfer between the positive electrode active substance and the external environment and full capacity release, further facilitating preparation of a solid-state battery (for example, an all-solid-state battery) with high discharge capacity, high rate performance, and good cycling performance.

Furthermore, in conventional lithium-ion batteries, carbon conductive substances are typically used as conductive materials. However, for a positive electrode where the solid electrolyte contains a sulfide solid electrolyte and the positive electrode active substance contains an oxide positive electrode active substance (for example, a lithium transition metal oxide), the electrochemical operating window exhibits relatively high voltages. At the high voltages, the sulfide solid electrolyte is prone to oxidative decomposition. Conventional carbon conductive substances exhibit poor compatibility with the sulfide solid electrolyte, which causes the conventional carbon conductive substances to easily accelerate the decomposition of the sulfide electrolyte, leading to increased interface impedance and decreased battery cycling performance of the solid-state battery (for example, an all-solid-state battery). This may be attributed to two main reasons: First, conventional carbon conductive substances typically have a large specific surface area and excessively high electronic conductivity, significantly increasing the contact area with the sulfide solid electrolyte and exacerbating accelerated decomposition of the sulfide solid electrolyte. Second, conventional carbon conductive substances generally contain oxygen-containing functional groups on the surface, and these oxygen-containing functional groups are prone to side reactions with the sulfide solid electrolyte, resulting in significant interface impedance. However, simply reducing the amount of the conventional carbon conductive substance can compromise the stability of the electrical contact network in the positive electrode, thereby affecting the capacity and rate performance of the solid-state battery (for example, an all-solid-state battery).

In this application, a non-carbon conductive substance is introduced into the positive electrode film to replace the conventional carbon conductive substance or reduce its amount used in the positive electrode of a solid-state battery (for example, an all-solid-state battery). This can suppress the accelerated decomposition of the sulfide solid electrolyte caused by the conventional carbon conductive substance while achieving favorable electronic conduction capability. The weight percentage of the non-carbon conductive substance in the positive electrode active material layer is controlled, so that the amount of the conventional carbon conductive substance can be correspondingly replaced or reduced under the typical amount of conductive material required for the positive electrode film. This allows the solid-state battery (for example, an all-solid-state battery) to achieve better overall performance in terms of discharge capacity, rate performance, and cycling performance while maintaining a robust and stable electrical contact network.

Moreover, for a positive electrode film including an oxide positive electrode active substance (for example, a lithium transition metal oxide) and a sulfide solid electrolyte, the weight percentage of the non-carbon conductive substance in the positive electrode active material layer is controlled within a suitable range, which is more conducive to forming a robust and stable electrical contact network and reducing interface impedance. This also enhances the structural stability of the positive electrode active substance, and suppresses the oxidative decomposition of the sulfide solid electrolyte at high voltages. As a result, the solid-state battery (for example, an all-solid-state battery) can achieve high discharge capacity, high rate performance, and good cycling performance.

Based on any suitable embodiment of this application, in some embodiments, the positive electrode conductive agent includes or does not include a carbon conductive substance, the carbon conductive substance satisfying at least one of the following characteristics:
a weight percentage of the carbon conductive substance relative to the non-carbon conductive substance is 0-50wt%, optionally 0-33wt%;
a weight percentage of the carbon conductive substance in the positive electrode active material layer is 0-1wt%, optionally 0-0.5wt%, further optionally 0; and
the carbon conductive substance includes one or more of superconducting carbon, acetylene black, carbon black, Ketjen black, carbon dots, carbon nanotubes, graphene, and carbon nanofibers.

A non-carbon conductive substance is introduced into the positive electrode conductive agent to replace the conventional carbon conductive substance or reduce its amount used, enabling the solid-state battery (for example, an all-solid-state battery) to achieve high discharge capacity, high rate performance, and good cycling performance while maintaining a robust and stable electrical contact network. The non-carbon conductive substance provided in this application can replace some or all of the conventional carbon conductive substance, meaning that less or no conventional carbon conductive substance can be added to the positive electrode film.

When the non-carbon conductive substance partially replaces the conventional carbon conductive substance, the amount of the carbon conductive substance can be controlled within the above low range, for example, one or both parameters of the weight percentage of the carbon conductive substance relative to the non-carbon conductive substance and the weight percentage of the carbon conductive substance in the positive electrode active material layer are controlled within the above ranges, effectively reducing the adverse effects of the conventional carbon conductive substance and achieving high discharge capacity, high rate performance, and good cycling performance.

When the non-carbon conductive substance fully replaces the conventional carbon conductive substance, that is, no conventional carbon conductive substance is added to the positive electrode film, it is possible to implement a robust electrical contact network while better reducing interface impedance and more effectively suppressing the decomposition of the sulfide solid electrolyte. This also further enhances the structural stability of the positive electrode active substance, thereby achieving higher discharge capacity, higher rate performance, and better cycling performance.

Conventional carbon conductive substances generally accelerate the oxidative decomposition of the sulfide solid electrolyte. Therefore, when a non-carbon conductive substance is used to replace some or all of these conventional carbon conductive substances, the benefits of the non-carbon conductive substance described above can be achieved.

Based on any suitable embodiment of this application, in some embodiments, the sulfide solid electrolyte includes at least one of a binary sulfide solid system and a ternary sulfide solid system;
optionally, the binary sulfide solid system includes one or more of Li₂S-P₂S₅, Li₂S-SiS₂, Li₂S-GeS₂, and Li₂S-B₂S₃; and
optionally, the ternary sulfide solid system includes one or more of argyrodite-type sulfide electrolyte, Li₂S-MeS₂-P₂S₅ ternary sulfide electrolyte, lithium germanium phosphorus sulfide-type sulfide electrolyte, Li₂S-P₂S₅-MS ternary sulfide electrolyte, Li₂S-P₂S₅-MCl ternary sulfide electrolyte, and thio-LISICON-type sulfide electrolyte; where Me includes one or more elements of Si, Ge, Sn, and Al; and M includes one or more elements of Ge, Al, Sn, Pb, Sb, Si, and As.

For a case that the positive electrode of a solid-state battery (for example, an all-solid-state battery) includes the foregoing sulfide solid electrolytes, a non-carbon conductive substance can be introduced to suppress the oxidative decomposition of the sulfide solid electrolyte at high voltages, thereby improving the discharge capacity, rate performance, and cycling performance of the solid-state battery (for example, an all-solid-state battery). This can also enhance the initial coulombic efficiency of the solid-state battery (for example, an all-solid-state battery).

Further, the introduction of a non-carbon conductive substance can replace some or all of the conventional carbon conductive substances caused by conventional carbon conductive substances, reducing the accelerated decomposition of the sulfide solid electrolyte and better suppressing the decomposition of the sulfide solid electrolyte.

Based on any suitable embodiment of this application, in some embodiments, Dᵥ50 of the sulfide solid electrolyte is 1 nm to 20 µm, optionally 50 nm to 5 µm; where Dᵥ50 represents a particle size at which a cumulative volume distribution percentage of a multi-particle mixture reaches 50%.

The particle size of the sulfide solid electrolyte is controlled within the above range, which is conducive to improving the overall ionic conduction capability of the sulfide solid electrolyte and providing a better electrical contact network while balancing manufacturing costs. A relatively small particle size of the sulfide solid electrolyte facilitates enhanced electrical contact between positive electrode active substances within the electrode film, thereby promoting the capacity and rate performance of the solid-state battery (for example, an all-solid-state battery). A relatively moderate particle size of the sulfide solid electrolyte is easier to manufacture.

Based on any suitable embodiment of this application, in some embodiments, a weight percentage of the sulfide solid electrolyte in the positive electrode active material layer is 0.1wt% to 30wt%, optionally 5wt% to 20wt%.

The weight percentage of the sulfide solid electrolyte in the positive electrode active material layer is controlled within the above range, which is beneficial for providing better overall ionic conduction capability.

Based on any suitable embodiment of this application, in some embodiments, the oxide positive electrode active substance (for example, lithium transition metal oxide) includes one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium-rich manganese positive electrode active substance, and modified forms of any of the above positive electrode active substances; where the lithium-rich manganese positive electrode active substance has a chemical formula of qLi₂MnO₃-(1-q)LiZO₂, where Z includes one or more elements of Ni, Co, Mn, Cr, Fe, Al, Nb, Mo, and Ru, and 0 ≤ q ≤ 1; and the modified forms include one or more of doping modification and coating modification.

A non-carbon conductive substance can be introduced into a positive electrode film containing the aforementioned different types of oxide positive electrode active substances (for example, a lithium transition metal oxide), implementing the aforementioned function of improving the discharge capacity, rate performance, and cycling performance of the solid-state battery (for example, an all-solid-state battery).

Based on any suitable embodiment of this application, in some embodiments, Dᵥ50 of the oxide positive electrode active substance (for example, a lithium transition metal oxide) is 0.1 µm to 20 µm, optionally 1 µm to 10 µm.

The particle size of the oxide positive electrode active substance (for example, a lithium transition metal oxide) is controlled within the above range, which is beneficial for enhancing the discharge capacity of the positive electrode active substance and maintaining good contact between the positive electrode active substance and the sulfide solid electrolyte in the composite positive electrode. A positive electrode active substance with a small particle size has a short internal active ion (for example, lithium ion) transport pathway, facilitating an increase in the discharge capacity of the positive electrode active substance itself. A positive electrode active substance with a large particle size can be better wrapped by the sulfide solid electrolyte, improving interface contact with the sulfide solid electrolyte and benefiting the cycling performance of the battery. A positive electrode material with a relatively moderate particle size enables the battery to achieve both high discharge capacity and excellent cycling performance.

Based on any suitable embodiment of this application, in some embodiments, a weight percentage of the oxide positive electrode active substance (for example, a lithium transition metal oxide) in the positive electrode active material layer is 70wt% to 99wt%, optionally 80wt% to 95wt%.

The weight percentage of the oxide positive electrode active substance (for example, a lithium transition metal oxide) in the positive electrode active material layer is controlled within the above range, which is beneficial for achieving both high energy density and cycling stability.

When the positive electrode film further includes a sulfide solid electrolyte, the weight percentage of the oxide positive electrode active substance (for example, a lithium transition metal oxide) in the positive electrode active material layer is controlled within the above range, which is also beneficial for achieving a balance between achieving high energy density and reducing oxidative decomposition of the sulfide solid electrolyte.

Based on any suitable embodiment of this application, in some embodiments, a thickness of the positive electrode active material layer is 30 µm to 400 µm, optionally 60 µm to 130 µm.

For the positive electrode of a solid-state battery (for example, an all-solid-state battery), relying solely on the positive electrode active substance to provide the electronic conduction capability without adding a conductive material can easily result in suboptimal discharge capacity and rate performance of the battery, and this deficiency is more prominent when the positive electrode of an all-solid-state battery is relatively thick. In this case, for a solid-state battery (for example, an all-solid-state battery) assembled using the positive electrode film provided in this application, the discharge capacity and rate performance are more significantly improved.

According to another aspect of this application, a positive electrode active material layer is provided, which is the positive electrode active material layer described in the first aspect of this application.

According to a second aspect of this application, a positive electrode film sheet is provided, including a positive electrode current collector and a positive electrode active material layer disposed on at least one side of the positive electrode current collector, the positive electrode active material layer being the positive electrode active material layer described in the first aspect of this application.

According to a third aspect of this application, a solid-state battery is provided, including at least one of the positive electrode film described in the first aspect of this application and the positive electrode film sheet described in the second aspect of this application.

According to the third aspect of this application, an all-solid-state battery is further provided, including at least one of the positive electrode film described in the first aspect of this application and the positive electrode film sheet described in the second aspect of this application.

According to a fourth aspect of this application, an electric apparatus is provided, including at least one of the foregoing solid-state battery and the all-solid-state battery described in the third aspect of this application.

According to a fifth aspect of this application, an application of the positive electrode film described in the first aspect of this application as a positive electrode film sheet in preparation of a solid-state secondary battery or as a positive electrode film layer in a solid-state secondary battery, or an application of the positive electrode film sheet described in the second aspect of this application in preparation of a solid-state secondary battery is provided; and
optionally, the solid-state secondary battery is an all-solid-state secondary battery.

According to a sixth aspect of this application, an application of a non-carbon conductive substance as a conductive agent in a positive electrode layer of a solid-state battery is provided, the positive electrode layer of the solid-state battery including the positive electrode film described in the first aspect of this application, and the non-carbon conductive substance being the non-carbon conductive substance in the positive electrode film; and
optionally, the solid-state battery is an all-solid-state battery.

The positive electrode layer of a solid-state battery (for example, an all-solid-state battery) can be prepared or provided using the foregoing positive electrode film. In the positive electrode active material layer of the positive electrode film, the positive electrode active substance includes an oxide positive electrode active substance (for example, a lithium transition metal oxide) capable of providing high energy density, and also incorporates a positive electrode solid electrolyte with certain ionic conductivity, and a non-carbon conductive substance with favorable electronic conductivity. Within the corresponding electrochemical window, the non-carbon conductive substance exhibits highly stable electronic conduction capability. The non-carbon conductive substance can also absorb and solidify oxygen that may be generated by the oxide positive electrode active substance (for example, a lithium transition metal oxide), suppressing oxygen release from the oxide positive electrode active substance (for example, a lithium transition metal oxide), and enhancing the structural stability of the positive electrode active substance, thereby improving battery performance. Through the multiple synergistic effects among the oxide positive electrode active substance (for example, a lithium transition metal oxide), the positive electrode solid electrolyte, and the non-carbon conductive substance, a robust and stable electrical contact network can be formed in the positive electrode film. This reduces interface impedance, and promotes efficient charge transfer between the positive electrode active substance and the external environment and full capacity release, facilitating preparation of a solid-state battery (for example, an all-solid-state battery) with high discharge capacity, high rate performance, and good cycling performance.

When the positive electrode solid electrolyte includes a sulfide solid electrolyte, in the positive electrode active material layer of the positive electrode film, the positive electrode active substance includes an oxide positive electrode active substance (for example, a lithium transition metal oxide) capable of providing high energy density, a sulfide solid electrolyte with excellent ionic conductivity, and a non-carbon conductive substance with favorable electronic conductivity. Within the corresponding electrochemical window, the non-carbon conductive substance not only exhibits highly stable electronic conduction capability but also is compatible with the sulfide solid electrolyte, with minimal or no side reactions with the sulfide solid electrolyte, reducing interface impedance. The non-carbon conductive substance is utilized to absorb and solidify oxygen that may be generated by the oxide positive electrode active substance (for example, a lithium transition metal oxide), suppressing oxygen release from the oxide positive electrode active substance (for example, a lithium transition metal oxide), and enhancing the structural stability of the positive electrode active substance. This can also suppress the oxidative decomposition of the sulfide solid electrolyte at high voltages, improving battery performance. Through the multiple synergistic effects among the oxide positive electrode active substance (for example, a lithium transition metal oxide), the sulfide solid electrolyte, and the non-carbon conductive substance, a robust and stable electrical contact network can be formed in the positive electrode film. This reduces interface impedance, and promotes efficient charge transfer between the positive electrode active substance and the external environment and full capacity release, facilitating preparation of a solid-state battery (for example, an all-solid-state battery) with high discharge capacity, high rate performance, and good cycling performance.

Additionally, in the positive electrode of the solid-state battery (for example, an all-solid-state battery), the use of conventional carbon conductive substances can be eliminated or reduced, decreasing the accelerated decomposition of the sulfide solid electrolyte caused by conventional carbon conductive substances, better suppressing the decomposition of the sulfide solid electrolyte, and further improving the discharge capacity, rate performance, and cycling performance of the solid-state battery (for example, an all-solid-state battery).

The details of one or more embodiments or implementations of this application are set forth in the accompanying drawings and description below. Other features, objectives, and advantages of this application will become apparent from the specification, drawings, and claims.

### BRIEF DESCRIPTION OF DRAWINGS

For better description and illustration of the embodiments, implementations, or examples provided in this application, reference may be made to one or more drawings. The additional details or examples used to describe the drawings should not be considered as limiting the scope of the disclosed application, the currently described embodiments, implementations, or examples, or the best mode of these applications as currently understood. It should also be noted that the drawings are drawn in a simplified form, solely for the purpose of facilitating clear and concise explanation of this application. The various dimensions of each component shown in the drawings are arbitrarily illustrated, may be precise, or may not be drawn to actual scale. For example, to make the illustrations clearer, the dimensions of some components in the drawings are appropriately exaggerated. Unless otherwise specified, the components in the drawings are not drawn to scale. The drawings of this application do not limit every dimension of each component. Moreover, throughout all drawings, identical reference numerals denote identical components. In the drawings:
FIG. 1 is a schematic diagram of a structure and internal components of a positive electrode active material layer included in a positive electrode film according to an embodiment of this application, where the positive electrode active material layer includes a lithium transition metal oxide, a positive electrode solid electrolyte, and a non-carbon conductive substance.
FIG. 2 is a schematic diagram of a structure and internal components of a positive electrode active material layer included in a positive electrode film according to an embodiment of this application, where the positive electrode active material layer includes a lithium transition metal oxide, a sulfide solid electrolyte, and a non-carbon conductive substance.
FIG. 3 is a schematic diagram of a structure of a positive electrode film according to an embodiment of this application, where the positive electrode film includes a positive electrode current collector and a positive electrode active material layer disposed on one side of the positive electrode current collector.
FIG. 4 is a schematic diagram of a structure of a positive electrode film according to an embodiment of this application, where the positive electrode film includes a positive electrode current collector and positive electrode active material layers disposed on two sides of the positive electrode current collector.
FIG. 5 is a schematic diagram of a structure of an all-solid-state cell according to an embodiment of this application, where the all-solid-state cell includes a positive electrode layer, a solid electrolyte layer, and a negative electrode layer stacked in sequence.

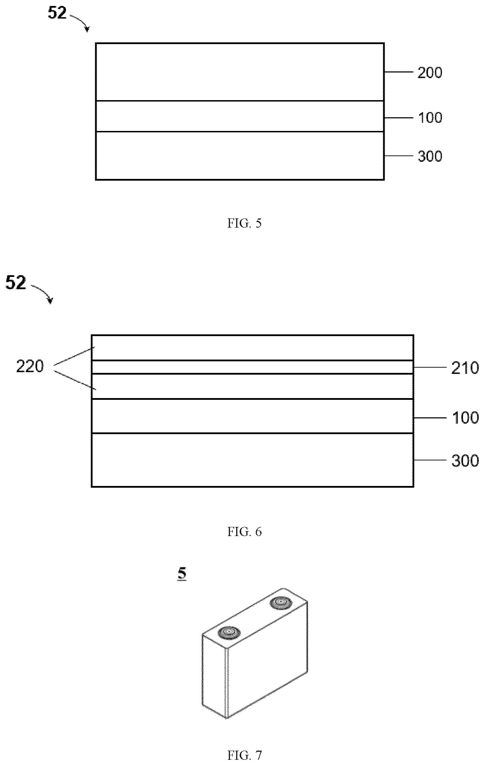

FIG. 6 is a schematic diagram of a structure of an embodiment of the all-solid-state cell shown in FIG. 5, where the all-solid-state cell includes a positive electrode layer, a solid electrolyte layer, and a negative electrode layer stacked in sequence, where the positive electrode layer includes a positive electrode film according to an embodiment of this application, and the positive electrode film includes a positive electrode current collector and positive electrode active material layers disposed on two sides of the positive electrode current collector, with a positive electrode active material layer disposed between the positive electrode current collector and the solid electrolyte layer.
FIG. 7 is a schematic diagram of an all-solid-state battery cell according to an embodiment of this application.
FIG. 8 is an exploded view of the all-solid-state battery cell according to the embodiment of this application shown in FIG. 7.
FIG. 9 is a schematic diagram of a battery module according to an embodiment of this application.
FIG. 10 is a schematic diagram of a battery pack according to an embodiment of this application.
FIG. 11 is an exploded view of the battery pack according to the embodiment of this application shown in FIG. 10.
FIG. 12 is a schematic diagram of an electric apparatus using an all-solid-state battery as a power source according to an embodiment of this application.
FIG. 13 is a comparison of first charge-discharge curves of Comparative Example 1 and Example 1.

### Description of reference signs:

20, positive electrode film; 220, positive electrode active material layer; 221, lithium transition metal oxide; 203, positive electrode solid electrolyte; 223, sulfide solid electrolyte; 225, non-carbon conductive substance; 200, positive electrode layer; 210, positive electrode current collector; 100, solid electrolyte layer; 300, negative electrode layer; 1, battery pack; 2, upper box body; 3, lower box body; 4, battery module; 5, all-solid-state battery cell; 51, housing; 52, all-solid-state cell; 53, cover plate; and 6, electric apparatus.

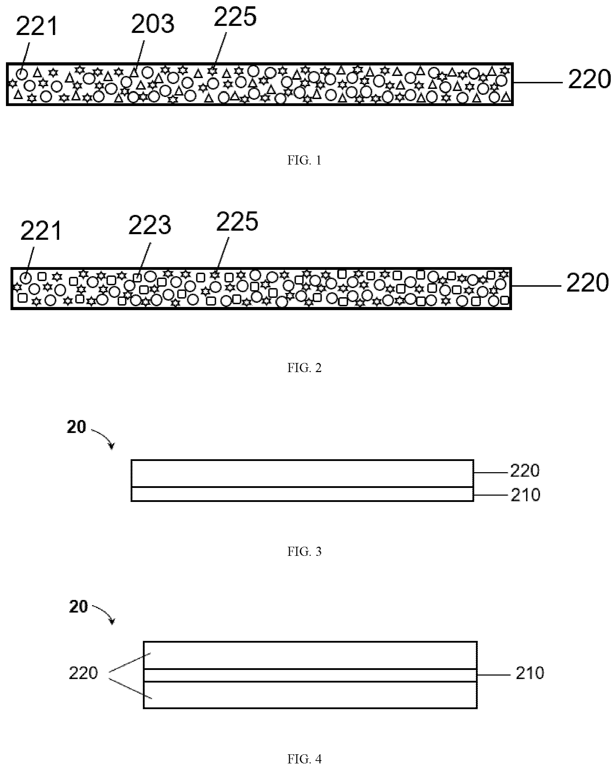

It can be understood that in each drawing, the depicted dimensions of the positive electrode film 20, the positive electrode current collector 210, the positive electrode active material layer 220, the positive electrode layer 200, the solid electrolyte layer 100, and the negative electrode layer 300 do not represent actual dimensions. In the positive electrode active material layer 220 of FIG. 1, the shapes and sizes of the lithium transition metal oxide 221, the positive electrode solid electrolyte 203, and the non-carbon conductive substance 225 do not represent or limit the actual shapes and sizes of the particles, and the illustrated quantities of the three substances do not represent or limit the actual quantities or quantity ratios. In the positive electrode active material layer 220 of FIG. 2, the shapes and sizes of the lithium transition metal oxide 221, the sulfide solid electrolyte 223, and the non-carbon conductive substance 225 do not represent or limit the actual shapes and sizes of the particles, and the illustrated quantities of the three substances do not represent or limit the actual quantities or quantity ratios.

### DESCRIPTION OF EMBODIMENTS

Hereinafter, some embodiments of the positive electrode film, positive electrode film sheet, solid-state battery (including all-solid-state battery), electric apparatus, and applications in this application are described in detail with appropriate reference to the drawings. However, unnecessary detailed descriptions may be omitted. For example, detailed descriptions of well-known matters or redundant descriptions of substantially identical structures may be omitted. This is to avoid unnecessarily lengthy descriptions and to facilitate understanding by those skilled in the art. Furthermore, the drawings and the following descriptions are provided to enable those skilled in the art to fully understand this application and are not intended to limit the subject matter recited in the claims.

The "ranges" disclosed in this application may be defined in the form of a lower limit and an upper limit. A given range is defined by selecting a lower limit and an upper limit, and the selected lower and upper limits define the boundaries of a specific range. Ranges defined in this manner may include or exclude the endpoints, with either endpoint independently included or excluded, and may be arbitrarily combined, that is, any lower limit may be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are also listed, the following ranges are all contemplated: 1-3, 1-4, 1-5, 2-3, 2-4, and 2-5. In this application, unless otherwise specified, the numerical range "a-b" represents an abbreviated representation of any combination of real numbers between a and b, where a and b are real numbers. For example, the numerical range "0-5" means that all real numbers between "0-5" have been fully listed herein, and "0-5" is merely an abbreviated representation of these numerical combinations. Additionally, when a parameter is expressed as an integer ≥2, it is equivalent to listing that the parameter is, for example, an integer such as 2, 3, 4, 5, 6, 7, 8, 9, 10, 11, 12, and the like For example, when a parameter is expressed as an integer selected from "2-10", it is equivalent to listing the integers 2, 3, 4, 5, 6, 7, 8, 9, and 10.

In this application, unless otherwise specified, "approximately" means within a reasonable range around a given number, with the range of variation depending on the type and value of the number. For example, it may allow for a range of ±10%, ±5%, ±2%, ±1%, and the like For instance, taking "approximately 20°C" with an approximate variation of ±1°C as an example, approximate values such as 19°C and 19.5°C within the range indicated by "approximately 20°C" should also be included in the range indicated by "approximately 20°C".

In this application, unless otherwise specified, terms such as "multiple", "plurality", and "several" refer to a quantity greater than or equal to 2. For example, "one or more" means one or ≥ (greater than or equal to) two. It can be understood that when referring to "any number" of items, it means a combination of any suitable number of items, that is, a combination of "any number" of items in a manner that is not conflicting and enables implementation of this application.

Unless otherwise specified, all embodiments and optional embodiments of this application may be combined with each other to form new technical solutions.

Reference to an "embodiment" herein means that a particular feature, structure, or characteristic described in connection with the embodiment may be included in at least one embodiment or implementation of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments. The term "implementation" mentioned herein has a similar understanding.

Those skilled in the art can understand that in the methods of various embodiments or implementations, the order of writing the steps does not imply a strict execution order or impose any limitation on the implementation process; the specific execution order of the steps should be determined based on their functions and possible inherent logic. Unless otherwise specified, all steps of this application may be performed sequentially or randomly, with sequential performance being preferred. For example, a method M including steps (a) and (b) means that the method may include steps (a) and (b) performed sequentially, or steps (b) and (a) performed sequentially. For example, if method M further includes step (c), it means that step (c) may be added to method M in any order, for example, method M may include steps (a), (b), and (c), or steps (a), (c), and (b), or steps (c), (a), and (b).

In this application, unless otherwise specified, open-ended technical features or solutions described with terms such as "contain", "include", or "comprise" do not exclude additional members beyond the listed members and may be regarded as providing both closed-ended features or solutions consisting of the listed members and open-ended features or solutions including additional members beyond the listed members. For example, A includes a1, a2, and a3; unless otherwise specified, it may further include other members or may not include additional members, and may be regarded as providing both the feature or solution of "A consists of a1, a2, and a3" or "A is selected from a1, a2, and a3", and the feature or solution of "A includes not only a1, a2, and a3 but also other members".

In this application, unless otherwise specified, A (for example, B) means that B is a non-limiting example of A, and it can be understood that A is not limited to B.

In this application, "optionally" and "optional" refer to being optional, that is, referring to either of the two parallel options of "present" or "absent". If multiple "optional" instances appear in a technical solution, unless otherwise specified and there is no conflict or mutual restriction, each "optional" instance is independent. Unless otherwise specified, descriptions such as "optionally include", and "optionally comprise" in this application, taking "optionally include" as an example, mean "may include or may not include".

In this application, unless otherwise specified, features or solutions corresponding to "and/or" include any single item from two or more related listed items, as well as any and all combinations of the related listed items, where any and all combinations include any two related listed items, any more related listed items, or all related listed items. For example, "A and/or B" refers to the group consisting of A, B, and "the combination of A and B". Herein, "containing A and/or B" may mean " containing A, containing B, and containing A and B", or " containing A, containing B, or containing A and B", and can be appropriately understood based on the context of the statement.

Terms such as "combinations thereof", "any combination thereof", and "any combination manner thereof" used herein include all suitable combinations of any two or more of the listed items.

In terms such as "suitable combination manner", "suitable manner", and "any suitable manner" used herein, "suitable" is based on the ability to implement the technical solutions of this application.

In this application, terms such as "preferably", "better", "more preferably", "suitably", "relatively better", and "relatively preferably" are merely used to describe embodiments or examples with better effects, and it should be understood that they do not limit the scope of protection of this application. If multiple "preferably" instances appear in a technical solution, unless otherwise specified and there is no conflict or mutual restriction, each "preferably" instance is independent.

In this application, terms such as "further", "still further", "particularly", "for example", "such as", "example", and "by way of example" are used for descriptive purposes to indicate differences in content but should not be understood as limiting the scope of protection of this application.

In this application, terms such as "first aspect", "second aspect", "third aspect", "fourth aspect", "first conductive substance", and "second conductive material", "first", "second", "third", "fourth", and the like, are solely for descriptive purposes and should not be understood as indicating or implying relative importance or quantity, nor as implicitly indicating the importance or quantity of the technical features indicated. Moreover, "first", "second", "third", "fourth", and the like, serve only as non-exhaustive listing purposes, and it should be understood that they do not constitute a closed limitation on quantity.

In this application, unless otherwise expressly specified and defined, a first feature being "on" or "under" a second feature may mean direct contact between the first and second features, or indirect contact between the first and second features through an intermediate medium. In this application, unless otherwise expressly specified and defined, a first feature being "on" or "under" a second feature may indicate a relative positional relationship in terms of horizontal height, or may merely indicate an attachment relationship without limiting the relative positional relationship in terms of horizontal height.

In this application, the term "room temperature" generally refers to 4°C to 35°C, and may refer to 20°C ± 5°C. In some embodiments or implementations of this application, room temperature refers to 20°C to 30°C.

In this application, for units of data ranges, if a unit is provided only after the right endpoint, it indicates that the units of the left and right endpoints are the same. For example, 3~5 h or 3-5 h both indicate that the units of the left endpoint "3" and the right endpoint "5" are h (hours), and have the same meaning as 3 h to 5 h. Similar descriptions of other parameters such as temperature, dimensions, and the like, are understood in the same manner.

The weight or mass of related components mentioned in the embodiments or implementations of this application may refer not only to the content of each component but also to the proportional relationship of weight or mass between the components. Therefore, scaling up or down the content of the related components according to the embodiments or implementations of this application proportionally is within the scope described by this application. Further, the mass involved in the embodiments or implementations of this application may be well-known mass units in the chemical field, such as micrograms (µg), milligrams (mg), grams (g), and kilograms (kg). Unless otherwise specified, the mass ratio is numerically equal to the corresponding weight ratio; for example, if the mass of substance A is m1 and its weight is W1, and the mass of substance B is m2 and its weight is W2, then the mass ratio m1/m2 is numerically equal to the corresponding weight ratio W1/W2.

In this application, unless otherwise specified, wt% represents the weight percentage, which is numerically equal to the corresponding mass percentage. In this application, for weight percentages, "0" has the same meaning as "0wt%" and can be used interchangeably.

In this application, unless otherwise specified, parameter units include: nm for nanometers, µm for micrometers, mS/cm for millisiemens per centimeter, S/cm for siemens per centimeter, V for volts, mPa·s for millipascal-seconds, mg/cm² for milligrams per square centimeter, g/cm² for grams per square centimeter, g/m² for grams per square meter, g/cm³ for grams per cubic centimeter, °C for degrees Celsius, and mA/g for milliamperes per gram.

In this application, "greater than or equal to" and "≥" have the same meaning and can be used interchangeably; "less than or equal to" and "≤" have the same meaning and can be used interchangeably; "greater than" can be equivalently expressed as ">," and "less than" can be equivalently expressed as "<." In this application, unless otherwise specified, "greater than or equal to" and "≥" can be regarded as providing both "greater than" and "equal to" options. In this application, unless otherwise specified, "less than or equal to" and "≤" can be regarded as providing both "less than" and "equal to" options.

In this application, exemplary descriptions such as "in some embodiments (or implementations)" and "in an embodiment (or implementation)" may include but are not limited to the following meanings: these solutions may be combined with other solutions in a suitable manner to form new technical solutions.

In solid-state batteries (for example, all-solid-state batteries), interface contact is one of the key challenges limiting their performance. Poor interface contact can affect the discharge capacity of the battery and deteriorate the rate performance and cycling performance of the battery. Taking all-solid-state batteries as an example, the common practice for all-solid-state batteries is to adopt a composite positive electrode configuration on the positive electrode side of the all-solid-state batteries, incorporating both a positive electrode active substance and a solid electrolyte in the positive electrode. The solid electrolyte is utilized to enhance the ionic conductivity on the positive electrode side, promote efficient charge transfer between the positive electrode active substance and the external environment and full capacity release, and reduce impedance. Also, the electronic conduction performance of the positive electrode active substance itself is utilized to conduct electrons to improve the cycling stability of the battery. However, the absence of conductive materials easily leads to insufficient electron conductivity and poor overall electrical contact in the positive electrode, affecting the capacity and rate performance of the all-solid-state battery. In practical applications, relying solely on the positive electrode active substance to provide electronic conductivity without adding a conductive material can easily result in suboptimal discharge capacity and rate performance of the battery, and this issue is more prominent when the positive electrode of an all-solid-state battery is relatively thick.

Oxide positive electrode active substances (for example, lithium transition metal oxides) are among the commonly used positive electrode active substances in traditional lithium-ion secondary batteries, capable of providing favorable energy density. Taking a lithium transition metal oxide as an example, when the lithium transition metal oxide is used in the positive electrode of a solid-state battery (for example, an all-solid-state battery), the electrochemical operating window for a positive electrode using the lithium transition metal oxide as the positive electrode active substance is typically between 2.8 V and 4.8 V. For example, for positive electrodes using the lithium cobalt oxide, lithium nickel cobalt manganese oxide, lithium nickel cobalt aluminum oxide, lithium-rich manganese positive electrode active substance, and the like as the positive electrode active substances, the electrochemical operating window is typically within the above range. However, at high voltages, oxide positive electrode active substances (for example, lithium transition metal oxides) are prone to releasing oxygen, which affects the stability of the positive electrode active substances, deteriorating the cycling performance of the battery.

The sulfide solid electrolyte has excellent ionic conductivity and is a highly favored solid electrolyte material for solid-state batteries (for example, all-solid-state batteries). For a positive electrode containing a sulfide solid electrolyte, when the positive electrode active substance includes an oxide positive electrode active substance (for example, a lithium transition metal oxide), due to the relatively high voltage of the electrochemical operating window, the sulfide solid electrolyte is prone to oxidative decomposition at such high voltages, which can easily lead to deterioration of discharge capacity, rate performance, and cycling performance.

If a composite positive electrode configuration is adopted on the positive electrode side of a solid-state battery (for example, an all-solid-state battery), incorporating a positive electrode active substance, a solid electrolyte, and a conductive material within the positive electrode plate, theoretically, the solid electrolyte and the conductive material can be utilized to respectively enhance the ionic conduction capability and electronic conduction capability on the positive electrode side, promoting efficient charge transfer between the positive electrode active substance and the external environment and full capacity release. The conductive material is expected to improve the electronic conduction capability in the composite positive electrode, thereby enhancing the discharge capacity and rate performance of the battery. It can be inferred that the conductive material plays a critical role in the performance of solid-state batteries (for example, all-solid-state batteries).

In traditional lithium-ion batteries, carbon conductive substances are typically used as conductive materials. However, for a positive electrode containing a sulfide solid electrolyte and an oxide positive electrode active substance (for example, a lithium transition metal oxide), the sulfide solid electrolyte is prone to oxidative decomposition at high voltages. Conventional carbon conductive substances exhibit poor compatibility with the sulfide solid electrolyte, which causes the conventional carbon conductive substances to easily accelerate the decomposition of the sulfide electrolyte, leading to increased interface impedance and decreased battery cycling performance of the solid-state battery (for example, an all-solid-state battery). This may be attributed to two main reasons: First, conventional carbon conductive substances typically have a large specific surface area and excessively high electronic conductivity, significantly increasing the contact area with the sulfide solid electrolyte and exacerbating accelerated decomposition of the sulfide solid electrolyte. Second, conventional carbon conductive substances generally contain oxygen-containing functional groups on the surface, and these oxygen-containing functional groups are prone to side reactions with the sulfide solid electrolyte, resulting in significant interface impedance. However, simply reducing the amount of the conventional carbon conductive substance can compromise the stability of the electrical contact network in the positive electrode, thereby affecting the capacity and rate performance of the solid-state battery (for example, an all-solid-state battery).

In view of this, this application provides at least a positive electrode film, a positive electrode film sheet, a solid-state battery (including an all-solid-state battery), an electric apparatus, and applications thereof. The positive electrode film can be used to prepare a solid-state battery (for example, an all-solid-state battery) with high discharge capacity, high rate performance, and good cycling performance.

According to a first aspect, this application provides a positive electrode film including a positive electrode active material layer, where the positive electrode active material layer includes an oxide positive electrode active substance, a positive electrode solid electrolyte, and a non-carbon conductive substance, the non-carbon conductive substance including at least one of elemental Se, elemental Te, and a Se/Te composite, the Se/Te composite having a chemical formula of SeₓTe₁₋ₓ, where 0 < x < 1. In some embodiments, the oxide positive electrode active substance includes a lithium transition metal oxide.

In some embodiments, a positive electrode film is provided, including a positive electrode active material layer 220 (see FIG. 1), where the positive electrode active material layer 220 includes a lithium transition metal oxide 221, a positive electrode solid electrolyte 203, and a non-carbon conductive substance 225, the non-carbon conductive substance including at least one of elemental Se, elemental Te, and a Se/Te composite, the Se/Te composite having a chemical formula of SeₓTe₁₋ₓ, where 0 < x < 1.

Through the synergistic effects among the oxide positive electrode active substance (for example, a lithium transition metal oxide), the solid electrolyte, and the non-carbon conductive substance, a robust and stable electrical contact network can be formed in the positive electrode film. This reduces interface impedance, and promotes efficient charge transfer between the positive electrode active substance and the external environment and full capacity release, facilitating preparation of a solid-state battery (for example, an all-solid-state battery) with high discharge capacity, high rate performance, and good cycling performance.

In this application, unless otherwise specified, the "solid-state battery" provided in this application refers to a battery in which an electrolyte includes a solid electrolyte; typically, a solid-state battery includes a positive electrode layer, a solid electrolyte layer, and a negative electrode layer. During the charging and discharging process of the battery, active ions intercalate and deintercalate back and forth between the positive electrode layer and the negative electrode layer. The solid electrolyte layer conducts ions between the positive electrode layer and the negative electrode layer and can also isolate the positive electrode layer from the negative electrode layer to prevent short-circuiting between the positive and negative electrodes, eliminating the need for using a separator in the solid-state battery as in traditional lithium-ion batteries. The solid-state battery employs non-flammable solid electrolytes to replace the organic liquid electrolytes used in traditional liquid lithium-ion batteries, significantly enhancing battery safety. In addition to improving safety, the solid-state battery can better accommodate high-energy-density positive and negative electrode materials and reduce system weight, facilitating an increase in energy density.

In this application, unless otherwise specified, a "solid electrolyte" refers to an electrolyte material or electrolyte substance that exists in a solid state during the storage and preparation of solid-state batteries and components making up the solid-state batteries, as well as during the operation of the solid-state batteries. It can be understood that the solid electrolyte exists in a solid state at, including but not limited to, room temperature.

In this application, unless otherwise specified, the "all-solid-state battery" provided in this application refers to a battery in which an electrolyte is a solid electrolyte; typically, an all-solid-state battery includes a positive electrode layer, a solid electrolyte layer, and a negative electrode layer. During the charging and discharging process of the battery, active ions intercalate and deintercalate back and forth between the positive electrode layer and the negative electrode layer. The solid electrolyte layer conducts ions between the positive electrode layer and the negative electrode layer and can also isolate the positive electrode layer from the negative electrode layer to prevent short-circuiting between the positive and negative electrodes, eliminating the need for using a separator in the all-solid-state battery as in traditional lithium-ion batteries.

In this application, unless otherwise specified, an electrode film may be a positive electrode film or a negative electrode film. The electrode film includes an electrode active substance. A positive electrode film includes a positive electrode active substance. A negative electrode film includes a negative electrode active substance. The electrode film may serve as an electrode layer in a solid-state battery.

In this application, unless otherwise specified, an electrode layer may be a positive electrode layer or a negative electrode layer. The "active substance" in an electrode film or an electrode layer refers to a substance capable of reversibly intercalating and deintercalating active ions. Unless otherwise specified, a "negative electrode active substance" refers to a substance used in the negative electrode layer and capable of reversibly intercalating and deintercalating active ions; and a "positive electrode active substance" refers to a substance used in the positive electrode layer and capable of reversibly deintercalating and intercalating active ions. Taking an all-solid-state battery as a non-limiting example of a solid-state battery, during charging of the all-solid-state battery, active ions deintercalate from the positive electrode, pass through the solid electrolyte layer, and intercalate into the negative electrode; during discharging of the all-solid-state battery, active ions deintercalate from the negative electrode and intercalate into the positive electrode. The active ions are not particularly limited. Without limitation, the active ions may be lithium ions, corresponding to a lithium-ion all-solid-state battery.

In this application, "electrode active material", "electrode active substance", "active material", and "active substance" have the same meaning and can be used interchangeably; "positive electrode active substance" and "positive electrode active material" have the same meaning and can be used interchangeably; "negative electrode active substance" and "negative electrode active material" have the same meaning and can be used interchangeably.

In this application, unless otherwise specified, an "electrode active material layer" includes at least one of a positive electrode active material layer in the positive electrode layer and a negative electrode active material layer in the negative electrode layer, and depending on the specific context, the electrode active material layer may refer to a positive electrode active material layer or a negative electrode active material layer. It can be understood that a positive electrode active material layer contains a positive electrode active substance and a negative electrode active material layer contains a negative electrode active substance. In this application, an "electrode active material layer" may also be abbreviated as an "active material layer".

In this application, unless otherwise specified, a positive electrode layer includes at least a positive electrode active material layer.

In some embodiments, a positive electrode film is provided, including a positive electrode active material layer, where the positive electrode active material layer includes an oxide positive electrode active substance, a sulfide solid electrolyte, and a non-carbon conductive substance, the non-carbon conductive substance including at least one of elemental Se, elemental Te, and a Se/Te composite, the Se/Te composite having a chemical formula of SeₓTe₁₋ₓ, where 0 < x < 1. In some embodiments, the oxide positive electrode active substance includes a lithium transition metal oxide.

In some embodiments, a positive electrode film is provided, including a positive electrode active material layer 220 (see FIG. 2). The positive electrode active material layer 220 includes a lithium transition metal oxide 221, a sulfide solid electrolyte 223, and a non-carbon conductive substance 225, the non-carbon conductive substance including at least one of elemental Se, elemental Te, and a Se/Te composite, the Se/Te composite having a chemical formula of SeₓTe₁₋ₓ, where 0 < x < 1.

In some embodiments, this application provides a positive electrode film including a positive electrode active material layer, the positive electrode active material layer including a positive electrode active substance, a positive electrode solid electrolyte, and a positive electrode conductive agent;
where the positive electrode active substance includes an oxide positive electrode active substance (for example, a lithium transition metal oxide), and the positive electrode conductive agent includes a non-carbon conductive substance, the non-carbon conductive substance including at least one of elemental Se, elemental Te, and a Se/Te composite, the Se/Te composite having a chemical formula of SeₓTe₁₋ₓ, where 0 < x < 1.

In this application, unless otherwise specified, a "positive electrode film" refers to a film that can be used as a positive electrode of a solid-state battery (for example, an all-solid-state battery), at least including a positive electrode active material layer, and typically also including a positive electrode current collector; and a "negative electrode film" refers to a film that can be used as a negative electrode of a solid-state battery (for example, an all-solid-state battery), at least including a negative electrode active material layer.

In this application, unless otherwise specified, a "positive electrode solid electrolyte" refers to a solid electrolyte located in the positive electrode film. The positive electrode solid electrolyte can enhance the ionic conduction capability of the positive electrode film and reduce interface impedance, capable of promoting efficient charge transfer between the positive electrode active substance and the external environment and full capacity release.

In this application, unless otherwise specified, a "positive electrode conductive agent" refers to a conductive material located in the positive electrode film, which conducts electrons in the positive electrode film, capable of enhancing the electronic conduction capability within the positive electrode film, thereby improving the discharge capacity and rate performance of the battery.

In this application, unless otherwise specified, an "oxide positive electrode active substance" has the well-known meaning in the art, referring to a positive electrode active substance in the form of an oxide. A non-limiting example of an oxide positive electrode active substance is a lithium transition metal oxide.

In this application, unless otherwise specified, a "lithium transition metal oxide" has the well-known meaning in the art, referring to a positive electrode active substance containing a transition metal element and element lithium.

In this application, unless otherwise specified, "elemental Se" and "Se in elemental form" have the same meaning and can be used interchangeably, both referring to Se in its elemental form. Unless otherwise specified, "elemental Te" and "Te in elemental form" have the same meaning and can be used interchangeably, both referring to Te in its elemental form.

In this application, unless otherwise specified, a "Se/Te composite" refers to a substance composed of element Se and element Te with a chemical formula of SeₓTe₁₋ₓ (0 < x < 1), also referred to as a "selenium-tellurium alloy". Typically, a Se/Te composite with a specific atomic ratio can be prepared by the following method: weighing Se powder and Te powder according to the stoichiometric ratio, vacuum-sealing them in a quartz tube with a vacuum degree of approximately 10⁻⁵ Torr (Torr), heating at 900°C to obtain a uniformly mixed melt, and quenching the melt in ice water to obtain the Se/Te composite (selenium-tellurium alloy).

In this application, unless otherwise specified, a "non-carbon conductive substance" in the positive electrode film refers to a conductive substance distinct from carbon conductive substances and capable of conducting electrons.

In this application, unless otherwise specified, a "carbon conductive substance" refers to a conductive material composed of element carbon, such as a conventional carbon conductive agent, further including one or more of superconducting carbon, acetylene black, carbon black, Ketjen black, carbon dots, carbon nanotubes, graphene, and carbon nanofibers.

In this application, the "non-carbon conductive substance" in the positive electrode film includes a first conductive substance; in this application, the "first conductive substance" is at least one of elemental Se, elemental Te, and a Se/Te composite, where the Se/Te composite has a chemical formula of SeₓTe₁₋ₓ, and 0 < x < 1. Without limitation, x may be any one of the following values or selected from a range formed by any two of the following values: 0.01, 0.02, 0.04, 0.05, 0.06, 0.08, 0.1, 0.12, 0.14, 0.15, 0.16, 0.18, 0.2, 0.22, 0.24, 0.25, 0.26, 0.28, 0.3, 0.32, 0.35, 0.36, 0.38, 0.4, 0.42, 0.44, 0.45, 0.46, 0.48, 0.5, 0.55, 0.6, 0.65, 0.7, 0.75, 0.8, 0.85, 0.9, 0.92, 0.94, 0.95, 0.96, 0.97, 0.98, 0.99, and the like. Both elemental Se and elemental Te exhibit high electronic conductivity, where elemental Se has an electronic conductivity of approximately 10 mS/cm and elemental Te has an electronic conductivity of approximately 2000 mS/cm. Additionally, within an electrochemical window range of 2.8 V to 4.8 V, for example, within an electrochemical operating window of an oxide positive electrode active substance (for example, a lithium transition metal oxide), selenium (Se) and tellurium (Te) exhibit almost no electrochemical activity, essentially not participating in electrochemical reactions and regarded as not contributing to capacity. In this case, capacity is provided by the positive electrode active substance, such as an oxide positive electrode active substance (further, such as a lithium transition metal oxide).

In this application, in addition to the first conductive substance, the non-carbon conductive substance in the positive electrode film may further include other types of non-carbon conductive substances, such as a non-carbon conductive substance with an electronic conductivity greater than or equal to that of elemental Se under certain temperature conditions. Non-limiting examples of other types of non-carbon conductive substances include non-carbon conductive substances with an electronic conductivity greater than or equal to that of elemental Se at any temperature or within any temperature range from 20°C to 100°C under identical test conditions.

For a solid-state battery (for example, an all-solid-state battery) with a low-voltage electrochemical window, elemental Se and elemental Te can be used as positive electrode active substances in the positive electrode of the solid-state battery (for example, an all-solid-state battery). In this case, elemental Se and elemental Te can undergo conversion reactions to store lithium. For example, an electrochemical operating window of a lithium-ion all-solid-state battery with selenium as a positive electrode active substance (referred to as a lithium-selenium battery) is approximately between 1.0 V and 3.0 V.

The positive electrode film adopts a composite positive electrode configuration, including a positive electrode active substance, a solid electrolyte (also referred to as a positive electrode solid electrolyte), and a conductive agent (also referred to as a positive electrode conductive agent). The addition of the solid electrolyte and the conductive agent can respectively enhance the ionic conduction capability and electronic conduction capability on the positive electrode side, promoting efficient charge transfer between the positive electrode active substance and the external environment and full capacity release. The positive electrode conductive agent can improve the electronic conduction capability within the positive electrode film, thereby enhancing the discharge capacity and rate performance of the battery. The non-carbon conductive substance introduced into the positive electrode conductive agent includes a first conductive substance, the first conductive substance being at least one of elemental Se, elemental Te, and a Se/Te composite, composed of one or both of element selenium (Se) and element tellurium (Te). Both elemental Se and elemental Te exhibit high electronic conductivity, where elemental Se has an electronic conductivity of approximately 10 mS/cm, and elemental Te has an electronic conductivity of approximately 2000 mS/cm, enabling the non-carbon conductive substance to serve as a conductive material in the positive electrode film and provide favorable electronic conduction capability. Additionally, within an electrochemical operating window of the oxide positive electrode active substance (for example, a lithium transition metal oxide), selenium (Se) and tellurium (Te) exhibit almost no electrochemical activity, essentially not participating in electrochemical reactions, thereby maintaining stable electronic conduction capability. After a non-carbon conductive substance is introduced as the conductive agent, peroxide ions (O₂²⁻) or oxygen radicals generated by the positive electrode material during charging to a high voltage can react with Se and/or Te in the non-carbon conductive substance to generate SeO₃²⁻ and/or TeO₃²⁻. This reaction can suppress oxygen release from the oxide positive electrode active substance (for example, a lithium transition metal oxide), enhancing the structural stability of the positive electrode active substance and the electrochemical performance of the battery. Therefore, introduction of a non-carbon conductive substance into the positive electrode film allows the prepared solid-state battery (for example, an all-solid-state battery) to achieve high discharge capacity, high rate performance, and good cycling performance at the same time.

Through the multiple synergistic effects among the oxide positive electrode active substance (for example, a lithium transition metal oxide), the positive electrode solid electrolyte, and the non-carbon conductive substance, a robust and stable electrical contact network can be formed in the positive electrode film. This reduces interface impedance, and promotes efficient charge transfer between the positive electrode active substance and the external environment and full capacity rele ase, facilitating preparation of a solid-state battery (for example, an all-solid-state battery) with high discharge capacity, high rate performance, and good cycling performance.

In this application, unless otherwise specified, a sample of the positive electrode active material layer can be obtained from a solid-state battery (for example, an all-solid-state battery) as follows: The battery is disassembled to obtain a sample of the active material layer of the electrode plate. Further, analysis of the active material layer can be performed using the following method: reconstructing the three-dimensional structure of the sample by utilizing the nanoscale spatial dynamic resolution and layer-by-layer milling technology of FIB-SEM; in combination with EDS elemental energy spectrum analysis, obtaining the distribution and proportion of each element; and finally, obtaining parameters such as the composition and thickness of each structural layer of the active material layer through software quantitative analysis.

In this application, unless otherwise specified, the types and contents of the positive electrode active substance (including an oxide positive electrode active substance, such as a lithium transition metal oxide), conductive agent (including a non-carbon conductive substance), and solid electrolyte in the positive electrode active material layer of a solid-state battery (for example, an all-solid-state battery) can be tested as follows: The structure and composition of the positive electrode active material layer can be analyzed using focused ion beam (FIB) technology, scanning electron microscopy (SEM), and elemental analysis techniques, for example, by combining cryo-focused ion beam (FIB) continuous slicing, cross-sectional SEM morphology observation, energy-dispersive spectroscopy (EDS) elemental energy spectrum analysis, and three-dimensional reconstruction analysis software. For example, cryo-focused ion beam (FIB) is used to finely slice the sample layer by layer along the lateral direction at different thickness positions (with a minimum slice thickness at the nanoscale), so as to separate samples of different layers at different thickness positions; scanning electron microscopy (SEM) is used to analyze the cross-section morphology, structure, and elemental distribution of each layer under continuous FIB slicing; combined with three-dimensional structure reconstruction software the three-dimensional structure of the sample is reconstructed, so as to estimate the mass and/or volume of different regions of the sample under test. In a non-limiting example, the above parameter testing and analysis can be performed using the FEI Scios 2HiVac equipment.

Based on any suitable embodiment of this application, in some embodiments, under at least one temperature or within at least a portion of a temperature range from 20°C to 100°C, under identical test conditions, an electronic conductivity of the non-carbon conductive substance is greater than or equal to an electronic conductivity of elemental Se. Without limitation, under at least one temperature or within at least a portion of a temperature range formed by any two of the following temperatures, under identical test conditions, the electronic conductivity of the non-carbon conductive substance is greater than or equal to the electronic conductivity of elemental Se: 20°C, 25°C, 26°C, 30°C, 35°C, 40°C, 45°C, 50°C, 60°C, 70°C, 80°C, 90°C, 100°C, and the like.

Based on any suitable embodiment of this application, in some embodiments, at any temperature or within any temperature range from 20°C to 100°C, under identical test conditions, the electronic conductivity of the non-carbon conductive substance is greater than or equal to the electronic conductivity of elemental Se. Without limitation, a temperature for testing electronic conductivity can be any one of the following temperatures or selected from a range formed by any two of the following temperatures: 20°C, 25°C, 26°C, 30°C, 35°C, 40°C, 45°C, 50°C, 60°C, 70°C, 80°C, 90°C, 100°C, and the like. In a non-limiting example, the temperature for testing electronic conductivity may alternatively be 20°C-30°C, 20°C-40°C, 20°C-50°C, 20°C-60°C, 20°C-80°C, 40°C-50°C, 40°C-60°C, or the like.

In addition to a first conductive agent, the positive electrode conductive agent may further include other non-carbon conductive substances with favorable electronic conductivity. For example, the other non-carbon conductive substances may be non-carbon conductive substances with an electronic conductivity superior to or substantially equivalent to that of elemental Se under certain temperature conditions.

In this application, unless otherwise specified, the electronic conductivity of the non-carbon conductive substance can be tested using conventional testing methods for powdered conductive agents, such as using a four-probe tester.

Based on any suitable embodiment of this application, in some embodiments, a weight percentage of element Te in the non-carbon conductive substance is ≥0wt%, optionally ≥50wt%, further optionally 50wt%-100wt%. Without limitation, the weight percentage of element Te in the non-carbon conductive substance may alternatively be any one of the following percentages or selected from a range formed by any two of the following percentages: 0wt%, 10wt%, 20wt%, 30wt%, 40wt%, 50wt%, 60wt%, 70wt%, 80wt%, 90wt%, and 100wt%.

Elemental Te has a high electronic conductivity (approximately 2000 mS/cm), comparable in magnitude to the electronic conductivity of the conventional carbon black material (for example, carbon black has an electronic conductivity of approximately 10 S/cm to 100 S/cm), providing excellent electronic conduction capability. A higher proportion of element Te is incorporated in the non-carbon conductive substance, which is beneficial for reducing the amount of the conductive agent and non-carbon conductive substance used in the positive electrode film, increasing the energy density of the battery.

Based on any suitable embodiment of this application, in some embodiments, a weight percentage of the first conductive substance in the non-carbon conductive substance is 80wt%-100wt%, optionally 90wt%-100wt%, or may be any one of the following percentages or selected from a range formed by any two of the following percentages: 80wt%, 85wt%, 90wt%, 95wt%, 96wt%, 98wt%, 99wt%, 99.9wt%, and 100wt%.

Based on any suitable embodiment of this application, in some embodiments, the non-carbon conductive substance is the first conductive substance, that is, composed of the first conductive substance. In this case, the weight percentage of the first conductive substance in the non-carbon conductive substance is 100wt%, and the non-carbon conductive substance is at least one of elemental Se, elemental Te, and a Se/Te composite, the Se/Te composite having a chemical formula of SeₓTe₁₋ₓ, where 0 < x < 1.

The weight percentage of the first conductive substance in the non-carbon conductive substance is controlled, which is more conducive to leveraging the role of the first conductive substance in suppressing oxygen release from the oxide positive electrode active substance (for example, a lithium transition metal oxide), thereby facilitating preparation of a solid-state battery (for example, an all-solid-state battery) with higher discharge capacity, higher rate performance, and better cycling performance.

Based on any suitable embodiment of this application, in some embodiments, Dᵥ50 of the non-carbon conductive substance is 1 nm to 20 µm, optionally 10 nm to 5 µm, further optionally 10 nm to 1 µm; where Dᵥ50 represents a particle size at which a cumulative volume distribution percentage of a multi-particle mixture reaches 50%. Without limitation, the Dᵥ50 of the non-carbon conductive substance may alternatively be any one of the following particle sizes or selected from a range formed by any two of the following particle sizes: 1 nm, 5 nm, 10 nm, 20 nm, 30 nm, 40 nm, 50 nm, 60 nm, 80 nm, 100 nm, 0.1 µm, 150 nm, 0.15 µm, 0.2 µm, 0.3 µm, 0.4 µm, 0.5 µm, 0.6 µm, 0.8 µm, 1 µm, 1.1 µm, 1.2 µm, 1.4 µm, 1.5 µm, 1.6 µm, 1.8 µm, 2 µm, 2.2 µm, 2.4 µm, 2.5 µm, 2.6 µm, 2.8 µm, 3 µm, 3.5 µm, 4 µm, 4.5 µm, 4.6 µm, 4.8 µm, 5 µm, 6 µm, 8 µm, 10 µm, and the like.

The particle size of the non-carbon conductive substance is controlled within the above range, which is conducive to improving the overall electronic conduction capability of the non-carbon conductive substance and providing a better electrical contact network while balancing manufacturing costs. A relatively small particle size of the non-carbon conductive substance facilitates enhanced electrical contact between positive electrode active substances within the electrode film, thereby promoting the capacity and rate performance of the solid-state battery (for example, an all-solid-state battery). A relatively moderate particle size of the non-carbon conductive substance facilitates manufacturing.

In this application, unless otherwise specified, the particle sizes and particle size distribution of the solid particles in a sample of the positive electrode active material layer from a solid-state battery (for example, an all-solid-state battery), including the particle sizes and particle size distributions of the positive electrode active substance, the oxide positive electrode active substance (for example, a lithium transition metal oxide) in the positive electrode active substance, the non-carbon conductive substance, and the solid electrolyte, can be analyzed as follows: In this application, unless otherwise specified, two-dimensional images with different components marked in different colors can be obtained using FIB-SEM combined with EDS testing, so as to distinguish the positive electrode active substance, non-carbon conductive substance, and solid electrolyte based on component types; and the particle sizes and particle size distributions of the positive electrode active substance, non-carbon conductive substance, and solid electrolyte can be analyzed using the built-in software of the EDS instrument.

In the context of this application, the cumulatively distributed particle size by volume DᵥN (where N is any value selected from 0-100) can be used to characterize a particle size of a material, referring to a particle size at which a cumulative volume distribution percentage reaches N%, where a volume proportion of particles with a particle size less than or equal to DᵥN is N%. DᵥN can be obtained from the cumulative volume distribution curve of the particle sizes of the material. Unless otherwise specified, the cumulative volume distribution curve starts accumulating at zero on the small particle size side. Dᵥ50 is used as an example for illustration. In this application, unless otherwise specified, Dᵥ50 refers to a particle size at which a cumulative volume distribution percentage of the material reaches 50%, indicating that 50% of the particles by volume of the material have a particle size less than or equal to Dᵥ50 and 50% of the particles by volume of the material have a particle size greater than Dᵥ50. Those skilled in the art can understand the meaning of Dᵥ50 and can measure it using well-known instruments and methods in the art. For example, measurements can be conveniently performed in accordance with GB/T 19077-2016 Particle Size Analysis-Laser Diffraction Methods using a laser particle size analyzer, such as the Mastersizer 2000E laser particle size analyzer from Malvern Instruments Ltd., UK, or the LS-909 laser particle size analyzer (OMEC). Further, for example, for equipment models such as MasterSizer 2000 (MasterSizer 2000) laser particle size analyzer, testing can be conducted following the standard GB/T19077-2016/ISO 13320:2009.

Based on any suitable embodiment of this application, in some embodiments, a weight percentage of the non-carbon conductive substance in the positive electrode active material layer is 0.1wt% to 10wt%, optionally 0.5wt% to 5wt%. Without limitation, the weight percentage of the non-carbon conductive substance in the positive electrode active material layer may alternatively be any one of the following weight percentages or selected from a range formed by any two of the following weight percentages: 0.1wt%, 0.2wt%, 0.4wt%, 0.5wt%, 0.6wt%, 0.8wt%, 1wt%, 1.0wt%, 1.2wt%, 1.5wt%, 1.6wt%, 1.8wt%, 2wt%, 2.0wt%, 2.5wt%, 3wt%, 3.5wt%, 4wt%, 5wt%, 6wt%, 7wt%, 8wt%, 9wt%, 10wt%, and the like.

The weight percentage of the non-carbon conductive substance in the positive electrode active material layer is controlled, which is more conducive to forming a robust and stable electrical contact network and reducing interface impedance while enhancing the structural stability of the positive electrode active substance, thereby allowing the solid-state battery (for example, an all-solid-state battery) to achieve high discharge capacity, high rate performance, and good cycling performance.

Based on any suitable embodiment of this application, in some embodiments, the positive electrode solid electrolyte includes a sulfide solid electrolyte.

Without limitation, a weight percentage of the sulfide solid electrolyte in the positive electrode solid electrolyte may be greater than or equal to 50wt% (that is, ≥50wt%), further may be greater than or equal to 60wt%, still further may be greater than or equal to 80wt%, still further may be greater than or equal to 90wt%, still further may be greater than or equal to 95wt%, and still further may be 100wt%. Without limitation, the weight percentage of the sulfide solid electrolyte in the positive electrode solid electrolyte may alternatively be any one of the following weight percentages or selected from a range formed by any two of the following weight percentages: 50wt%, 55wt%, 60wt%, 65wt%, 70wt%, 72wt%, 74wt%, 75wt%, 76wt%, 78wt%, 80wt%, 82wt%, 84wt%, 85wt%, 86wt%, 88wt%, 90wt%, 92wt%, 94wt%, 95wt%, 96wt%, 97wt%, 98wt%, 99wt%, 100wt%, and the like.

For those skilled in the art, it can be understood that if a solvent is needed for liquid-phase dispersion of the sulfide solid electrolyte, an organic solvent can be used. The types of organic solvents may include one or two of p-xylene, trimethylbenzene, butyl butyrate, heptane, and the like, and further, may be p-xylene.

The sulfide solid electrolyte possesses excellent ionic conduction capability. The sulfide solid electrolyte is incorporated in the positive electrode layer, better promoting efficient charge transfer between the positive electrode active substance and the external environment and full capacity release. Further, selenium (Se) and tellurium (Te) are in the same group as sulfur (S), resulting in good compatibility between the non-carbon conductive substance and the sulfide solid electrolyte. Additionally, the absence of oxygen-containing functional groups on the surface of the non-carbon conductive substance can reduce side reactions between the non-carbon conductive substance and the sulfide solid electrolyte, which is beneficial for reducing interface impedance. Moreover, when charged to a high voltage, the oxide positive electrode active substance (for example, a lithium transition metal oxide) may generate oxygen, which can attack the sulfide solid electrolyte, leading to decomposition of the sulfide solid electrolyte. When a sulfide solid electrolyte without a non-carbon conductive substance is introduced into the positive electrode of a solid-state battery using an oxide positive electrode active substance (for example, the positive electrode of an all-solid-state battery using a lithium transition metal oxide), the oxidative decomposition of the sulfide solid electrolyte can easily increase interface impedance, adversely affecting discharge capacity and resulting in suboptimal electrochemical performance of the battery. The introduction of a non-carbon conductive substance can suppress the oxidative decomposition of the sulfide solid electrolyte at high voltages, fully leveraging the superior ionic conduction function of the sulfide solid electrolyte. Through the multiple synergistic effects among the oxide positive electrode active substance (for example, a lithium transition metal oxide), the sulfide solid electrolyte, and the non-carbon conductive substance, a better and more stable electrical contact network can be formed in the positive electrode film. This further reduces interface impedance, and further promotes efficient charge transfer between the positive electrode active substance and the external environment and full capacity release, further facilitating preparation of a solid-state battery (for example, an all-solid-state battery) with high discharge capacity, high rate performance, and good cycling performance. In contrast, within the voltage range of the electrochemical operating window of a lithium-ion solid-state battery (for example, a lithium-ion all-solid-state battery) with selenium as the positive electrode active substance, the oxidative decomposition of the sulfide electrolyte is not severe, and even some of the electrolyte can be reversibly reduced, thereby contributing to some capacity. For such lithium-selenium batteries, carbon conductive substances do not accelerate the oxidative decomposition of the sulfide electrolyte, allowing the use of conventional carbon conductive substances as conductive agents in the positive electrode.

Furthermore, in conventional lithium-ion batteries, carbon conductive substances are typically used as conductive materials. For a positive electrode where the solid electrolyte contains a sulfide solid electrolyte and the positive electrode active substance contains an oxide positive electrode active substance (for example, a lithium transition metal oxide), the electrochemical operating window exhibits relatively high voltages. At the high voltages, the sulfide solid electrolyte is prone to oxidative decomposition. Conventional carbon conductive substances exhibit poor compatibility with the sulfide solid electrolyte, which causes the conventional carbon conductive substances to easily accelerate the decomposition of the sulfide electrolyte, leading to increased interface impedance and decreased battery cycling performance of the solid-state battery (for example, an all-solid-state battery). This may be attributed to two main reasons: First, conventional carbon conductive substances typically have a large specific surface area and excessively high electronic conductivity, significantly increasing the contact area with the sulfide solid electrolyte and exacerbating accelerated decomposition of the sulfide solid electrolyte. Second, conventional carbon conductive substances generally contain oxygen-containing functional groups on the surface, and these oxygen-containing functional groups are prone to side reactions with the sulfide solid electrolyte, resulting in significant interface impedance. However, simply reducing the amount of the conventional carbon conductive substance can compromise the stability of the electrical contact network in the positive electrode, affecting the capacity and rate performance of the all-solid-state battery.

In this application, a non-carbon conductive substance is introduced into the positive electrode film to replace the conventional carbon conductive substance or reduce its amount used in the positive electrode of a solid-state battery (for example, an all-solid-state battery). This can suppress the accelerated decomposition of the sulfide solid electrolyte caused by the conventional carbon conductive substance while achieving favorable electronic conduction capability. The weight percentage of the non-carbon conductive substance in the positive electrode active material layer is controlled, so that the amount of the conventional carbon conductive substance can be correspondingly replaced or reduced under the typical amount of conductive material required for the positive electrode film. This allows the solid-state battery (for example, an all-solid-state battery) to achieve better overall performance in terms of discharge capacity, rate performance, and cycling performance while maintaining a robust and stable electrical contact network.

Further, for a positive electrode film including an oxide positive electrode active substance (for example, a lithium transition metal oxide) and a sulfide solid electrolyte, the weight percentage of the non-carbon conductive substance in the positive electrode active material layer is controlled within a suitable range, which is more conducive to forming a robust and stable electrical contact network and reducing interface impedance. This also enhances the structural stability of the positive electrode active substance, and suppresses the oxidative decomposition of the sulfide solid electrolyte at high voltages. As a result, the solid-state battery (for example, an all-solid-state battery) can achieve high discharge capacity, high rate performance, and good cycling performance.

In some embodiments, the positive electrode conductive agent may or may not include a carbon conductive substance.

In this application, when the positive electrode conductive agent includes a carbon conductive agent, the corresponding carbon conductive agent may be referred to as a "second conductive material". Without limitation, the second conductive material may include one or more of superconducting carbon, acetylene black, carbon black, Ketjen black, carbon dots, carbon nanotubes, graphene, and carbon nanofibers.

In this case, a non-carbon conductive substance is introduced into the positive electrode conductive agent, so that the amount of the conventional carbon conductive substance can be replaced or reduced under the typical amount of conductive material required for the positive electrode film. This allows the solid-state battery (for example, an all-solid-state battery) to achieve high discharge capacity, high rate performance, and good cycling performance while maintaining a robust and stable electrical contact network. The non-carbon conductive substance provided in this application can replace some or all of the conventional carbon conductive substance, meaning that less or no conventional carbon conductive substance can be added to the positive electrode film.

Based on any suitable embodiment of this application, in some embodiments, a weight percentage of the carbon conductive substance relative to the non-carbon conductive substance is 0-50wt%, optionally 0-33wt%. Without limitation, the weight percentage of the carbon conductive substance relative to the non-carbon conductive substance may alternatively be any one of the following weight percentages or selected from a range formed by any two of the following weight percentages: 0wt%, 1wt%, 2wt%, 4wt%, 6wt%, 8wt%, 10wt%, 15wt%, 20wt%, 25wt%, 30wt%, 33wt%, 35wt%, 40wt%, 45wt%, 50wt%, and the like.

When the non-carbon conductive substance partially replaces the conventional carbon conductive substance, the amount of the carbon conductive substance can be controlled within the above low range, for example, one or both parameters of the weight percentage of the carbon conductive substance relative to the non-carbon conductive substance and the weight percentage of the carbon conductive substance in the positive electrode active material layer are controlled within the above ranges, effectively reducing the adverse effects of the conventional carbon conductive substance and achieving high discharge capacity, high rate performance, and good cycling performance.

Based on any suitable embodiment of this application, in some embodiments, a weight percentage of the carbon conductive substance in the positive electrode active material layer is 0-1wt%, optionally 0-0.5wt%, further optionally 0. Without limitation, the weight percentage of the carbon conductive substance in the positive electrode active material layer may alternatively be any one of the following weight percentages or selected from a range formed by any two of the following weight percentages: 0wt%, 0.1wt%, 0.2wt%, 0.4wt%, 0.5wt%, 0.6wt%, 0.8wt%, 1wt%, and the like.

When the non-carbon conductive substance fully replaces the conventional carbon conductive substance, that is, no conventional carbon conductive substance is added to the positive electrode film, it is possible to implement a robust electrical contact network while better reducing interface impedance and more effectively suppressing the decomposition of the sulfide solid electrolyte. This also further enhances the structural stability of the positive electrode active substance, thereby achieving higher discharge capacity, higher rate performance, and better cycling performance.

Based on any suitable embodiment of this application, in some embodiments, the carbon conductive substance includes one or more of superconducting carbon, acetylene black, carbon black, Ketjen black, carbon dots, carbon nanotubes, graphene, and carbon nanofibers.

Conventional carbon conductive substances generally accelerate the oxidative decomposition of the sulfide solid electrolyte. Therefore, when a non-carbon conductive substance is used to replace all or some of these conventional carbon conductive substances, the aforementioned benefits of the non-carbon conductive substance can be realized.

Based on any suitable embodiment of this application, in some embodiments, the positive electrode conductive agent includes or does not include a carbon conductive substance, the carbon conductive substance satisfying at least one of the following characteristics (any numerical parameter in the following characteristics may alternatively be selected from any suitable value or range in the context):
a weight percentage of the carbon conductive substance relative to the non-carbon conductive substance is 0-50wt%, optionally 0-33wt%;
a weight percentage of the carbon conductive substance in the positive electrode active material layer is 0-1wt%, optionally 0-0.5wt%, further optionally 0; and
the carbon conductive substance includes one or more of superconducting carbon, acetylene black, carbon black, Ketjen black, carbon dots, carbon nanotubes, graphene, and carbon nanofibers.

Without limitation, the sulfide solid electrolyte may include at least one of a binary sulfide solid system and a ternary sulfide solid system. Without limitation, the binary sulfide solid system may include one or more of Li₂S-P₂S₅, Li₂S-SiS₂, Li₂S-GeS₂, and Li₂S-B₂S₃. Without limitation, the ternary sulfide solid system may include one or more of argyrodite-type sulfide electrolyte, Li₂S-MeS₂-P₂S₅ ternary sulfide electrolyte, lithium germanium phosphorus sulfide-type sulfide electrolyte, Li₂S-P₂S₅-MS ternary sulfide electrolyte, Li₂S-P₂S₅-MCl ternary sulfide electrolyte, and thio-LISICON-type sulfide electrolyte; where Me may include one or more elements of silicon (Si), germanium (Ge), tin (Sn), and aluminum (Al), further may be selected from one or more of Si, Ge, Sn, and Al; and M may include one or more elements of Ge, Al, Sn, lead (Pb), antimony (Sb), Si, and arsenic (As), further may be selected from one or more of Ge, Al, Sn, Pb, Sb, Si, and As.

For a case that the positive electrode of a solid-state battery (for example, an all-solid-state battery) includes the foregoing sulfide solid electrolytes, a non-carbon conductive substance can be introduced to suppress the oxidative decomposition of the sulfide solid electrolyte at high voltages, thereby improving the discharge capacity, rate performance, and cycling performance of the solid-state battery (for example, an all-solid-state battery). This can also enhance the initial coulombic efficiency of the solid-state battery (for example, an all-solid-state battery).

Further, the introduction of a non-carbon conductive substance can replace some or all of the conventional carbon conductive substances, reducing the accelerated decomposition of the sulfide solid electrolyte caused by the conventional carbon conductive substances and better suppressing the decomposition of the sulfide solid electrolyte.

Based on any suitable embodiment of this application, in some embodiments, Dᵥ50 of the sulfide solid electrolyte is 1 nm to 20 µm, optionally 50 nm to 5 µm; where Dᵥ50 represents a particle size at which a cumulative volume distribution percentage of a multi-particle mixture reaches 50%. Without limitation, the Dᵥ50 of the sulfide solid electrolyte may alternatively be any one of the following particle sizes or selected from a range formed by any two of the following particle sizes: 1 nm, 5 nm, 10 nm, 20 nm, 30 nm, 40 nm, 50 nm, 60 nm, 80 nm, 100 nm, 0.1 µm, 150 nm, 0.15 µm, 0.2 µm, 0.3 µm, 0.4 µm, 0.5 µm, 0.6 µm, 0.8 µm, 1 µm, 1.1 µm, 1.2 µm, 1.4 µm, 1.5 µm, 1.6 µm, 1.8 µm, 2 µm, 2.2 µm, 2.4 µm, 2.5 µm, 2.6 µm, 2.8 µm, 3 µm, 3.5 µm, 4 µm, 4.5 µm, 4.6 µm, 4.8 µm, 5 µm, 6 µm, 8 µm, 10 µm, 12 µm, 12.5 µm, 13 µm, 14 µm, 15 µm, 16 µm, 18 µm, 20 µm, and the like.

The particle size of the sulfide solid electrolyte is controlled within the above range, which is conducive to improving the overall ionic conduction capability of the sulfide solid electrolyte and providing a better electrical contact network while balancing manufacturing costs. A relatively small particle size of the sulfide solid electrolyte facilitates enhanced electrical contact between positive electrode active substances within the electrode film, thereby promoting the capacity and rate performance of the solid-state battery (for example, an all-solid-state battery). A relatively moderate particle size of the sulfide solid electrolyte facilitates manufacturing.

Based on any suitable embodiment of this application, in some embodiments, a weight percentage of the sulfide solid electrolyte in the positive electrode active material layer is 0.1wt% to 30wt%, optionally 5wt% to 20wt%. Without limitation, the weight percentage of the sulfide solid electrolyte in the positive electrode active material layer may alternatively be any one of the following weight percentages or selected from a range formed by any two of the following weight percentages: 0.1wt%, 0.2wt%, 0.4wt%, 0.5wt%, 0.6wt%, 0.8wt%, 1wt%, 1.2wt%, 1.5wt%, 1.6wt%, 1.8wt%, 2wt%, 2.5wt%, 3wt%, 3.5wt%, 4wt%, 5wt%, 6wt%, 7wt%, 8wt%, 9wt%, 10wt%, 12wt%, 14wt%, 15wt%, 16wt%, 18wt%, 20wt%, 22wt%, 24wt%, 25wt%, 26wt%, 28wt%, 30wt%, and the like.

The weight percentage of the sulfide solid electrolyte in the positive electrode active material layer is controlled within the above range, which is beneficial for providing better overall ionic conduction capability.

Without limitation, the oxide positive electrode active substance (for example, a lithium transition metal oxide) in the positive electrode active substance may include oxide positive electrode active substances (for example, lithium transition metal oxides) in positive electrode active substances well-known in the art for use in solid-state batteries (for example, all-solid-state batteries), but is not limited thereto. Examples of the oxide positive electrode active substance (for example, a lithium transition metal oxide) may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Non-limiting examples of the lithium cobalt oxide may include LiCoO₂; non-limiting examples of the lithium nickel oxide may include LiNiO₂; non-limiting examples of the lithium manganese oxide may include LiMnO₂, LiMn₂O₄, and the like; non-limiting examples of the lithium nickel cobalt manganese oxide may include LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), and the like. Non-limiting examples of the lithium nickel cobalt aluminum oxide may include LiNi_{0.80}Co_{0.15}Al_{0.05}O₂.

In some embodiments, the oxide positive electrode active substance contains element nickel (Ni), and further, the oxide positive electrode active substance further contains element cobalt (Co) and element Q, where element Q may be one or both of element manganese (Mn) and element aluminum (Al). In some embodiments, the lithium transition metal oxide contains element nickel (Ni), and further, the lithium transition metal oxide further contains element cobalt (Co) and element Q, where element Q may be one or both of element manganese (Mn) and element aluminum (Al). In this case, an atomic ratio of element nickel to element lithium may be denoted as Q_{Ni}. In some of these embodiments, Q_{Ni} ≥ 0.3; optionally, Q_{Ni} ≥ 0.5; further optionally, Q_{Ni} ≥ 0.6; still further optionally, Q_{Ni} ≥ 0.8; still further optionally, Q_{Ni} ≥ 0.9. Without limitation, Q_{Ni} may alternatively be any one of the following values, or ≥ (greater than or equal to) any one of the following values and less than 1, or selected from a range formed by any two of the following values: 1/3, 0.4, 0.5, 0.6, 0.7, 0.8, 0.9, 0.93, and the like. Without limitation, Q_{Ni} may alternatively be selected from any of the following ranges: 0.5 ≤ Q_{Ni} < 1, 0.5 ≤ Q_{Ni} ≤ 0.95, 0.5 ≤ Q_{Ni} ≤ 0.94, 0.5 ≤ Q_{Ni} ≤ 0.93, 0.6 ≤ Q_{Ni} < 1, 0.6 ≤ Q_{Ni} ≤ 0.95, 0.6 ≤ Q_{Ni} ≤ 0.94, 0.6 ≤ Q_{Ni} ≤ 0.93, 0.7 ≤ Q_{Ni} < 1, 0.7 ≤ Q_{Ni} ≤ 0.95, 0.7 ≤ Q_{Ni} ≤ 0.94, 0.7 ≤ Q_{Ni} ≤ 0.93, 0.8 ≤ Q_{Ni} < 1, 0.8 ≤ Q_{Ni} ≤ 0.95, 0.8 ≤ Q_{Ni} ≤ 0.94, 0.8 ≤ Q_{Ni} ≤ 0.93, 0.83 ≤ Q_{Ni} < 1, 0.83 ≤ Q_{Ni} ≤ 0.95, 0.83 ≤ Q_{Ni} ≤ 0.94, 0.83 ≤ Q_{Ni} ≤ 0.93, and the like.

In some embodiments, in the oxide positive electrode active substance (for example, a lithium transition metal oxide), an atomic ratio of element nickel to element oxygen may be denoted as R_{Ni/O}. In some of these embodiments, R_{Ni/O} ≥ 0.15; optionally, R_{Ni/O} ≥ 0.25; further optionally, R_{Ni/O} ≥ 0.3; still further optionally, R_{Ni/O} ≥ 0.4; still further optionally, R_{Ni/O} ≥ 0.45. Without limitation, R_{Ni/O} may alternatively be any one of the following values, or greater than or equal to any one of the following values and less than 0.5, or selected from a range formed by any two of the following values: 1/6, 0.2, 0.25, 0.3, 1/3, 0.35, 0.4, 0.45, 0.46, 0.465, 0.47, and the like. Without limitation, R_{Ni/O} may alternatively be selected from any of the following ranges: 0.25 ≤ R_{Ni/O} < 0.5, 0.25 ≤ R_{Ni/Oi} ≤ 0.475, 0.25 ≤ R_{Ni/O} ≤ 0.47, 0.25 ≤ R_{Ni/O} ≤ 0.465, 0.3 ≤ R_{Ni/O} < 0.5, 0.3 ≤ R_{Ni/O} ≤ 0.475, 0.3 ≤ R_{Ni/O} ≤ 0.47, 0.3 ≤ R_{Ni/O} ≤ 0.465, 0.35 ≤ R_{Ni/O} < 0.5, 0.35 ≤ R_{Ni/O} ≤ 0.475, 0.35 ≤ R_{Ni/O} ≤ 0.47, 0.35 ≤ R_{Ni/O} ≤ 0.465, 0.4 ≤ R_{Ni/O} < 0.5, 0.4 ≤ R_{Ni/O} ≤ 0.475, 0.4 ≤ R_{Ni/O} ≤ 0.47, 0.4 ≤ R_{Ni/O} ≤ 0.465, 0.415 ≤ R_{Ni/O} < 0.5, 0.415 ≤ R_{Ni/O} ≤ 0.475, 0.415 ≤ R_{Ni/O} ≤ 0.47, 0.415 ≤ R_{Ni/O} ≤ 0.465, and the like.

Based on any suitable embodiment of this application, in some embodiments, the oxide positive electrode active substance (for example, a lithium transition metal oxide) includes one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium-rich manganese positive electrode active substance, and modified forms of any of the above positive electrode active substances; where the lithium-rich manganese positive electrode active substance has a chemical formula of qLi₂MnO₃-(1-q)LiZO₂, Z may include one or more elements of nickel (Ni), cobalt (Co), manganese (Mn), chromium (Cr), iron (Fe), aluminum (Al), niobium (Nb), molybdenum (Mo), and ruthenium (Ru), and 0 ≤ q ≤ 1; and the modified forms may include one or more of doping modification and coating modification. Without limitation, q may be any one of the following values or selected from a range formed by any two of the following values: 0, 0.01, 0.02, 0.04, 0.05, 0.06, 0.08, 0.1, 0.12, 0.14, 0.15, 0.16, 0.18, 0.2, 0.22, 0.24, 0.25, 0.26, 0.28, 0.3, 0.32, 0.35, 0.36, 0.38, 0.4, 0.42, 0.44, 0.45, 0.46, 0.48, 0.5, 0.55, 0.6, 0.65, 0.7, 0.75, 0.8, 0.85, 0.9, 0.92, 0.94, 0.95, 0.96, 0.97, 0.98, 0.99, 1, and the like.

Taking an all-solid-state battery as an example, and further taking an all-solid-state battery with lithium ions as the active ions as an example, it can be understood that during the charging and discharging process of an all-solid-state battery, lithium (Li) intercalation, deintercalation, and consumption take place, and the Li content in the positive electrode layer (including the positive electrode film in the context) varies at different discharge states of the battery. In the exemplary descriptions of the positive electrode active substance in this application, unless otherwise specified, the Li content may refer to an initial state of a material, or may refer to a non-initial state after charge-discharge cycles. When the positive electrode active substance is applied to a positive electrode layer of an all-solid-state battery system, the Li content in the positive electrode active substance contained in the positive electrode layer typically changes after charge-discharge cycles. The Li content can be measured using atomic molar content, but is not limited thereto. Regarding "the Li content refers to an initial state of a material", the initial state of the material refers to a state before being placed in the positive electrode layer. It can be understood that new materials or substances obtained by appropriately modifying the listed positive electrode active substances are also within the scope of positive electrode active substances, where the appropriate modification refers to acceptable modification methods for positive electrode active substances, with an non-limiting example including coating modification. In the exemplary descriptions of the positive electrode active substances in this application, the oxygen (O) content is typically a theoretical state value. Lattice oxygen release can cause changes in the atomic molar content of oxygen, and the actual O content fluctuates. The O content can be measured using atomic molar content, but is not limited thereto.

In some embodiments, in addition to the oxide positive electrode active substance (for example, a lithium transition metal oxide), the positive electrode active substance may further include other positive electrode active substances well-known in the art for use in solid-state batteries (for example, all-solid-state batteries). In a non-limiting example, other positive electrode active substances that can be used in solid-state batteries (for example, all-solid-state batteries) may include one or more of the following materials: olivine-structured lithium-containing phosphate and modified compounds thereof. However, this application is not limited to these materials, and other existing materials that can be used as positive electrode active substances for solid-state batteries (for example, all-solid-state batteries) can also be used. These positive electrode active substances can be used alone or in combination of two or more. Non-limiting examples of the olivine-structured lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. An example of lithium iron phosphate is LiFePO₄ (also referred to as LFP). An example of lithium manganese phosphate is LiMnPO₄.

Without limitation, a weight percentage of the oxide positive electrode active substance (for example, a lithium transition metal oxide) in the positive electrode active substance may be greater than or equal to 50wt% (that is, ≥50wt%), further may be greater than or equal to 60wt%, still further may be greater than or equal to 80wt%, still further may be greater than or equal to 90wt%, still further may be greater than or equal to 95wt%, and still further may be 100wt%. Without limitation, the weight percentage of the oxide positive electrode active substance (for example, a lithium transition metal oxide) in the positive electrode active substance may alternatively be any one of the following weight percentages or selected from a range formed by any two of the following weight percentages: 50wt%, 55wt%, 60wt%, 65wt%, 70wt%, 72wt%, 74wt%, 75wt%, 76wt%, 78wt%, 80wt%, 82wt%, 84wt%, 85wt%, 86wt%, 88wt%, 90wt%, 92wt%, 94wt%, 95wt%, 96wt%, 97wt%, 98wt%, 99wt%, 100wt%, and the like.

A non-carbon conductive substance can be introduced into a positive electrode film containing the aforementioned different types of oxide positive electrode active substances (for example, a lithium transition metal oxide), implementing the aforementioned function of improving the discharge capacity, rate performance, and cycling performance of the solid-state battery (for example, an all-solid-state battery).

In some embodiments, Dᵥ50 of the positive electrode active substance is 0.1 µm to 20 µm, optionally 1 µm to 10 µm. Without limitation, the Dᵥ50 of the positive electrode active substance may alternatively be any one of the following particle sizes or selected from a range formed by any two of the following particle sizes: 0.1 µm, 0.2 µm, 0.3 µm, 0.4 µm, 0.5 µm, 0.6 µm, 0.8 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 16.5 µm, 17 µm, 17.5 µm, 18 µm, 18.5 µm, 19 µm, 19.5 µm, 20 µm, and the like.

Based on any suitable embodiment of this application, in some embodiments, Dᵥ50 of the oxide positive electrode active substance (for example, a lithium transition metal oxide) is 0.1 µm to 20 µm, optionally 1 µm to 10 µm. Without limitation, the Dᵥ50 of the oxide positive electrode active substance (for example, lithium transition metal oxide) may alternatively be any one of the following particle sizes or selected from a range formed by any two of the following particle sizes: 0.1 µm, 0.2 µm, 0.3 µm, 0.4 µm, 0.5 µm, 0.6 µm, 0.8 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 16.5 µm, 17 µm, 17.5 µm, 18 µm, 18.5 µm, 19 µm, 19.5 µm, 20 µm, and the like.

The particle size of the oxide positive electrode active substance (for example, a lithium transition metal oxide) is controlled within the above range, which is beneficial for enhancing the discharge capacity of the positive electrode active substance and maintaining good contact between the positive electrode active substance and the sulfide solid electrolyte in the composite positive electrode. A positive electrode active substance with a small particle size has a short internal active ion (for example, lithium ion) transport pathway, facilitating an increase in the discharge capacity of the positive electrode active substance itself. A positive electrode active substance with a large particle size can be better wrapped by the sulfide solid electrolyte, improving interface contact with the sulfide solid electrolyte and benefiting the cycling performance of the battery. A positive electrode material with a relatively moderate particle size enables the battery to achieve both high discharge capacity and excellent cycling performance.

Based on any suitable embodiment of this application, in some embodiments, a weight percentage of the oxide positive electrode active substance (for example, a lithium transition metal oxide) in the positive electrode active material layer is 70wt% to 99wt%, optionally 80wt% to 95wt%. Without limitation, the weight percentage of the oxide positive electrode active substance (for example, a lithium transition metal oxide) in the positive electrode active material layer may alternatively be any one of the following weight percentages or selected from a range formed by any two of the following weight percentages: 70wt%, 72wt%, 74wt%, 75wt%, 76wt%, 78wt%, 80wt%, 82wt%, 84wt%, 85wt%, 86wt%, 88wt%, 90wt%, 92wt%, 94wt%, 95wt%, 96wt%, 97wt%, 98wt%, 99wt%, and the like.

The weight percentage of the oxide positive electrode active substance (for example, a lithium transition metal oxide) in the positive electrode active material layer is controlled within the above range, which is beneficial for achieving both high energy density and cycling stability.

When the positive electrode film further includes a sulfide solid electrolyte, the weight percentage of the oxide positive electrode active substance (for example, a lithium transition metal oxide) in the positive electrode active material layer is controlled within the above range, which is also beneficial for achieving a balance between achieving high energy density and reducing oxidative decomposition of the sulfide solid electrolyte.

In this application, unless otherwise specified or in case of conflict, two or more of the following characteristics related to the technical solutions provided in this application can be suitably combined: the type of the non-carbon conductive substance, the weight percentage of element Te in the non-carbon conductive substance, the Dᵥ50 of the non-carbon conductive substance, the weight percentage of the non-carbon conductive substance in the positive electrode active material layer, the weight percentage of the carbon conductive substance relative to the non-carbon conductive substance, the weight percentage of the carbon conductive substance in the positive electrode active material layer, the type of the sulfide solid electrolyte, the Dᵥ50 of the sulfide solid electrolyte, the weight percentage of the sulfide solid electrolyte in the positive electrode active material layer, the type of the oxide positive electrode active substance (for example, a lithium transition metal oxide), the Dᵥ50 of the positive electrode active substance, the Dᵥ50 of the oxide positive electrode active substance (for example, a lithium transition metal oxide), the weight percentage of the oxide positive electrode active substance (for example, a lithium transition metal oxide) in the positive electrode active material layer, the weight percentage of the oxide positive electrode active substance (for example, a lithium transition metal oxide) in the positive electrode active substance, and the like.

Without limitation, the positive electrode film includes a positive electrode current collector and a positive electrode active material layer, the positive electrode active material layer being located on at least one side of the positive electrode current collector.

Based on any suitable embodiment of this application, in some embodiments, in the positive electrode film, a thickness of the positive electrode active material layer is 30 µm to 400 µm, optionally 60 µm to 130 µm, or may be any one of the following thicknesses or selected from a range formed by any two of the following thicknesses: 30 µm, 40 µm, 50 µm, 60 µm, 80 µm, 100 µm, 120 µm, 130 µm, 140 µm, 150 µm, 160 µm, 180 µm, 200 µm, and the like. Without limitation, the thickness of the positive electrode active material layer may alternatively be within any of the following ranges: 40 µm to 400 µm, 40 µm to 300 µm, 40 µm to 200 µm, 40 µm to 150 µm, 40 µm to 130 µm, 40 µm to 120 µm, 50 µm to 400 µm, 50 µm to 300 µm, 50 µm to 200 µm, 50 µm to 150 µm, 50 µm to 130 µm, 50 µm to 120 µm, 60 µm to 400 µm, 60 µm to 300 µm, 60 µm to 200 µm, 60 µm to 150 µm, 60 µm to 120 µm, 80 µm to 400 µm, 80 µm to 300 µm, 80 µm to 200 µm, 80 µm to 150 µm, 80 µm to 120 µm, 100 µm to 200 µm, 120 µm to 260 µm, and the like.

In this application, unless otherwise specified, the "thickness of the positive electrode active material layer" in the positive electrode film refers to a total thickness in the positive electrode film. When positive electrode active material layers are disposed on two sides of the positive electrode current collector, the thickness of the positive electrode active material layer refers to a sum of the thicknesses on two sides.

For the positive electrode of a solid-state battery (for example, an all-solid-state battery), relying solely on the positive electrode active substance to provide the electronic conduction capability without adding a conductive material can easily result in suboptimal discharge capacity and rate performance of the battery, and this deficiency is more prominent when the positive electrode of a solid-state battery (for example, an all-solid-state battery) is relatively thick. In this case, for a solid-state battery (for example, an all-solid-state battery) assembled using the positive electrode film provided in this application, the discharge capacity and rate performance are more significantly improved.

In some embodiments, the positive electrode active material layer optionally includes a binder (referred to as a positive electrode binder). In a non-limiting example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. Typically, the weight percentage of the positive electrode binder in the positive electrode active material layer may be 0-10wt%, further may be 0-8wt%, still further may be 0.1wt%-5wt%, and still further may be 1wt%-5wt%, based on a total weight of the positive electrode active material layer.

The following are some additional descriptions regarding the positive electrode film.

Without limitation, the positive electrode film includes a positive electrode current collector and a positive electrode active material layer disposed on at least one side of the positive electrode current collector, with the definition of the positive electrode active material layer referring to the foregoing.

In some embodiments, the positive electrode film includes a positive electrode current collector and a positive electrode active material layer disposed on at least one surface of the positive electrode current collector. For the definition of the positive electrode active material layer, reference may be made to the foregoing description.

In some embodiments, referring to FIG. 3, the positive electrode film 20 includes a positive electrode current collector 210 and a positive electrode active material layer 220 located on one side of the positive electrode current collector 210.

In some embodiments, referring to FIG. 4, the positive electrode film 20 includes a positive electrode current collector 210 and positive electrode active material layers 220 located on two sides of the positive electrode current collector 210.

Without limitation, a weight percentage of the positive electrode active substance in the positive electrode active material layer may be ≥80wt%, and further may be ≥90wt%.

In a non-limiting example, the positive electrode current collector has two surfaces facing away from each other in its thickness direction, and the positive electrode active material layer is disposed on either one or both of the two surfaces of the positive electrode current collector facing away from each other.

In some embodiments, the positive electrode film may be in the form of a positive electrode film layer or a positive electrode film sheet.

The positive electrode film may be an independent positive electrode film sheet, which is then used to assemble a solid-state battery (for example, an all-solid-state battery); or the positive electrode film may be a positive electrode film layer present in a composite structure, where the constituent materials of the positive electrode film layer can be pressed into a film on the surface of a solid electrolyte layer.

In some embodiments, the positive electrode current collector may be a metal foil or a composite current collector. For example, as a metal foil, aluminum foil may be used. In the positive electrode current collector, the composite current collector may include a polymer material base layer and a metal layer formed on at least one surface of the polymer material base layer. In the positive electrode current collector, the composite current collector can be obtained by forming a metal material on the polymer material substrate. In the positive electrode current collector, non-limiting examples of the metal material may include at least one of aluminum, aluminum alloy, nickel, nickel alloy, titanium, titanium alloy, silver, silver alloy, and the like. In the positive electrode current collector, non-limiting examples of the polymer material substrate may include one or more of polypropylene (PP), polyethylene terephthalate (PET), polybutylene terephthalate (PBT), polystyrene (PS), polyethylene (PE), and the like.

The positive electrode film can be prepared using a dry method or a wet method. For example, a dry pressing method can be used to prepare the film. For another example, a wet coating method can be used to prepare the film.

In some embodiments, a positive electrode film sheet may be prepared as follows: dry-mixing the components used to prepare the positive electrode film sheet, such as the positive electrode active substance, the positive electrode solid electrolyte, the positive electrode conductive agent, the binder (that is, the positive electrode binder), and any other components, then heating and pressing the mixed material to make a dough-like material, performing hot rolling to obtain a self-supporting positive electrode sheet, and hot-rolling the self-supporting positive electrode sheet with the positive electrode current collector to composite the self-supporting positive electrode sheet on at least one side (a single side or both sides) of the positive electrode current collector, thereby obtaining the positive electrode film sheet. Without limitation, a double-planetary mixer can be used for dry mixing. Without limitation, a kneader can be used for heating and pressing kneading. Without limitation, the temperature for hot rolling can be 75°C to 85°C, further such as 78°C, 80°C, or 82°C. The method of assembling a solid-state battery (for example, an all-solid-state battery) using the positive electrode film sheet is suitable for industrial mass production.

In some embodiments, a positive electrode film sheet can be prepared as follows: dispersing the components used to prepare the positive electrode film sheet, such as the positive electrode active substance, the positive electrode solid electrolyte, the positive electrode conductive agent, the binder (that is, the positive electrode binder), and any other components, in an organic solvent to produce a positive electrode slurry; further, applying the positive electrode slurry on at least one surface of the positive electrode current collector, followed by processes such as drying and cold pressing, to obtain the positive electrode film sheet. Cold pressing can be performed using a cold rolling machine. The types of the organic solvent in the positive electrode slurry may include one or two of p-xylene, trimethylbenzene, butyl butyrate, heptane, and the like, and further may be p-xylene. The surface of the positive electrode current collector to which the positive electrode slurry is applied may be a single surface of the positive electrode current collector, or may be both surfaces of the positive electrode current collector. The solid content of the positive electrode slurry may be 40wt% to 80wt%. The viscosity of the positive electrode slurry at room temperature can be adjusted to 5000 mPa·s to 25000 mPa·s. During application of the positive electrode slurry, the coating weight per unit area (excluding the solvent) may be 15 mg/cm² to 35 mg/cm². The compacted density of the positive electrode film sheet may be 3.0 g/cm³ to 3.6 g/cm³, optionally 3.3 g/cm³ to 3.5 g/cm³.

The "compacted density" used in this application has the well-known meaning in the art and is one of the reference indicators for the energy density of a material. In this application, unless otherwise specified, the compacted density of an electrode layer refers to a ratio of a mass of the electrode active material layer to its volume. The compacted density of a positive electrode layer, a positive electrode film sheet, or a positive electrode film refers to a ratio of a mass of the positive electrode active material layer to its volume, and the compacted density of a negative electrode layer, a negative electrode plate, or a negative electrode film refers to a ratio of a mass of the negative electrode active material layer to its volume.

According to still another aspect of this application, a positive electrode active material layer is provided, which is the positive electrode active material layer described in the first aspect of this application.

According to a second aspect of this application, a positive electrode film sheet is provided, including a positive electrode current collector and a positive electrode active material layer disposed on at least one side of the positive electrode current collector, the positive electrode active material layer being the positive electrode active material layer described in the first aspect of this application.

According to a third aspect of this application, a solid-state battery is provided, including at least one of the positive electrode film described in the first aspect of this application and the positive electrode film sheet described in the second aspect of this application.

According to the third aspect of this application, an all-solid-state battery is further provided, including at least one of the positive electrode film described in the first aspect of this application and the positive electrode film sheet described in the second aspect of this application.

According to a fourth aspect of this application, an electric apparatus is provided, including the all-solid-state battery described in the third aspect of this application.

According to a fifth aspect of this application, an application of the positive electrode film described in the first aspect of this application as a positive electrode film sheet in preparation of a solid-state secondary battery or as a positive electrode film layer in a solid-state secondary battery, or an application of the positive electrode film sheet described in the second aspect of this application in preparation of a solid-state secondary battery is provided. In some embodiments, the solid-state secondary battery is an all-solid-state secondary battery.

According to the fifth aspect of this application, an application of the positive electrode film described in the first aspect of this application as a positive electrode film sheet in preparation of an all-solid-state secondary battery or as a positive electrode film layer in an all-solid-state secondary battery, or an application of the positive electrode film sheet described in the second aspect of this application in preparation of an all-solid-state secondary battery is further provided.

According to a sixth aspect of this application, an application of a non-carbon conductive substance as a conductive agent in a positive electrode layer of a solid-state battery is provided, the positive electrode layer of the solid-state battery being the positive electrode film described in the first aspect of this application, and the non-carbon conductive substance being the non-carbon conductive substance in the positive electrode film. In some embodiments, the solid-state battery is an all-solid-state battery.

According to the sixth aspect of this application, an application of a non-carbon conductive substance as a conductive agent in a positive electrode layer of an all-solid-state battery is further provided, the positive electrode layer of the all-solid-state battery being the positive electrode film described in the first aspect of this application, and the non-carbon conductive substance being the non-carbon conductive substance in the positive electrode film.

In some embodiments, the positive electrode film is located in the positive electrode layer of a solid-state battery (for example, an all-solid-state secondary battery), and an operating voltage of the solid-state battery (for example, an all-solid-state secondary battery) may be greater than 2.5 V, still further may be greater than or equal to 3.0 V, still further may be 3.0 V to 4.8 V, and still further may be 3.0 V to 4.3 V, but is not limited thereto.

A positive electrode layer of a solid-state battery (for example, an all-solid-state battery) can be prepared or provided using the foregoing positive electrode film. In the positive electrode active material layer of the positive electrode film, the positive electrode active substance includes an oxide positive electrode active substance (for example, a lithium transition metal oxide) capable of providing high energy density, and also incorporates a positive electrode solid electrolyte with certain ionic conductivity, and a non-carbon conductive substance with favorable electronic conductivity. Within the corresponding electrochemical window, the non-carbon conductive substance exhibits highly stable electronic conduction capability. The non-carbon conductive substance can also absorb and solidify oxygen that may be generated by the oxide positive electrode active substance (for example, a lithium transition metal oxide), suppressing oxygen release from the oxide positive electrode active substance (for example, a lithium transition metal oxide), and enhancing the structural stability of the positive electrode active substance, thereby improving battery performance. Through the multiple synergistic effects among the oxide positive electrode active substance (for example, a lithium transition metal oxide), the positive electrode solid electrolyte, and the non-carbon conductive substance, a robust and stable electrical contact network can be formed in the positive electrode film. This reduces interface impedance, and promotes efficient charge transfer between the positive electrode active substance and the external environment and full capacity release, facilitating preparation of a solid-state battery (for example, an all-solid-state battery) with high discharge capacity, high rate performance, and good cycling performance.

When the positive electrode solid electrolyte includes a sulfide solid electrolyte, in the positive electrode active material layer of the positive electrode film, the positive electrode active substance includes an oxide positive electrode active substance (for example, a lithium transition metal oxide) capable of providing high energy density, a sulfide solid electrolyte with excellent ionic conductivity, and a non-carbon conductive substance with favorable electronic conductivity. Within the corresponding electrochemical window, the non-carbon conductive substance not only exhibits highly stable electronic conduction capability but also is compatible with the sulfide solid electrolyte, with minimal or no side reactions with the sulfide solid electrolyte, reducing interface impedance. The non-carbon conductive substance is utilized to absorb and solidify oxygen that may be generated by the oxide positive electrode active substance (for example, a lithium transition metal oxide), suppressing oxygen release from the oxide positive electrode active substance (for example, a lithium transition metal oxide), and enhancing the structural stability of the positive electrode active substance. This can also suppress the oxidative decomposition of the sulfide solid electrolyte at high voltages, improving battery performance. Through the multiple synergistic effects among the oxide positive electrode active substance (for example, a lithium transition metal oxide), the sulfide solid electrolyte, and the non-carbon conductive substance, a robust and stable electrical contact network can be formed in the positive electrode film. This reduces interface impedance, and promotes efficient charge transfer between the positive electrode active substance and the external environment and full capacity release, facilitating preparation of a solid-state battery (for example, an all-solid-state battery) with high discharge capacity, high rate performance, and good cycling performance.

Additionally, in the positive electrode of the solid-state battery (for example, an all-solid-state battery), the use of conventional carbon conductive substances can be eliminated or reduced, decreasing the accelerated decomposition of the sulfide solid electrolyte caused by conventional carbon conductive substances, better suppressing the decomposition of the sulfide solid electrolyte, and further improving the discharge capacity, rate performance, and cycling performance of the solid-state battery (for example, an all-solid-state battery).

Unless otherwise specified, the solid-state battery provided in this application is a solid-state secondary battery.

In this application, an all-solid-state battery includes a solid-state battery cell, the solid-state battery cell including the positive electrode film described in the first aspect of this application.

Unless otherwise specified, the all-solid-state battery provided in this application is an all-solid-state secondary battery.

In this application, an all-solid-state battery includes an all-solid-state battery cell, the all-solid-state battery cell including the positive electrode film described in the first aspect of this application.

In some embodiments, Te powder is used as the positive electrode conductive agent. Due to higher electronic conductivity of Te powder, a solid-state battery (for example, an all-solid-state battery) prepared using Te powder as the positive electrode conductive agent has better electrochemical performance compared to some embodiments that only Se powder is used as the positive electrode conductive agent.

In some embodiments, when the non-carbon conductive substance includes both element Se and element Te, the solid-state battery (for example, an all-solid-state battery) exhibits excellent discharge capacity, rate performance, and cycling performance. Additionally, in the SeₓTe₁₋ₓ composite, Se and Te are combined at the atomic scale, generally providing a synergistic effect superior to that of a simple mixture of Se and Te.

In some embodiments, when the positive electrode solid electrolyte includes a sulfide solid electrolyte and the non-carbon conductive substance includes both element Se and element Te, the discharge capacity, rate performance, and cycling performance of the solid-state battery (for example, an all-solid-state battery) are enhanced. This is due to the synergistic effect between element Se and element Te, where element Se is more likely to bind with peroxide ions to form SeO₃²⁻, which is more effective in suppressing the decomposition of the sulfide solid electrolyte; while the content of element Te is high, the electronic conductivity of the non-carbon conductive substance is higher, providing more robust electron conduction pathways. Therefore, when the non-carbon conductive substance is a SeₓTe₁₋ₓ composite or a mixture of Se and Te, the solid-state battery (for example, an all-solid-state battery) can achieve better electrochemical performance.

In some embodiments, when the particle size of the non-carbon conductive substance is relatively small, both the discharge capacity and cycling stability of the solid-state battery (for example, an all-solid-state battery) are improved. This is because when the particle size of the non-carbon conductive substance is smaller, electron contact within the composite positive electrode becomes better, thereby improving electrochemical performance.

In some embodiments, a moderate weight percentage of the non-carbon conductive substance in the positive electrode active material layer (for example, 1.8wt% to 2.2wt%, and further, for example, 2wt%) ensures sufficient electron conduction in the composite positive electrode without affecting ion conduction, resulting in superior overall electrochemical performance.

In some comparative examples, when only the carbon conductive substance is used as the positive electrode conductive agent without adding a non-carbon conductive substance, the performance of the solid-state battery (for example, an all-solid-state battery) deteriorates significantly as the amount of the carbon conductive substance used increases. At the same amount of positive electrode conductive agent, the electrochemical performance of a solid-state battery (for example, an all-solid-state battery) using a non-carbon conductive substance (for example, Se) as the positive electrode conductive agent is superior to that of a solid-state battery (for example, an all-solid-state battery) using only a carbon conductive substance (for example, Super P) as the positive electrode conductive agent.

In some embodiments, the positive electrode solid electrolyte includes a sulfide solid electrolyte, and when a non-carbon conductive substance (for example, Se) is used as the positive electrode conductive agent, the electrochemical performance of the solid-state battery (for example, an all-solid-state battery) is significantly improved, proving that the non-carbon conductive substance (for example, Se) can suppress the decomposition of the sulfide solid electrolyte.

In some embodiments, adding a small amount of carbon conductive substance in addition to the non-carbon conductive substance allows the solid-state battery (for example, an all-solid-state battery) to maintain good electrochemical performance, far superior to the electrochemical performance of a solid-state battery (for example, an all-solid-state battery) using only the carbon conductive substance as the positive electrode conductive agent.

In some embodiments, the positive electrode solid electrolyte includes a sulfide solid electrolyte, and when a small amount of carbon conductive substance is added in addition to the non-carbon conductive substance, the performance of a battery using carbon nanotubes as the carbon conductive substance is better than that of a battery using Super P. This is because carbon nanotubes have an elongated shape, resulting in a relatively small contact area with the sulfide solid electrolyte and thus a weaker decomposition effect on the sulfide solid electrolyte compared to Super P.

In some embodiments, reducing the particle size of the sulfide solid electrolyte improves ion contact within the composite positive electrode, correspondingly enhancing the capacity, rate performance, and cycling performance of the battery.

In some embodiments, reducing the particle size of the positive electrode active substance shortens the diffusion path within the positive electrode, increasing the discharge capacity of the battery. In some other embodiments, increasing the particle size of the positive electrode active substance allows larger positive electrode materials to be better wrapped by the positive electrode solid electrolyte (for example, the sulfide solid electrolyte), improving contact with the positive electrode solid electrolyte and enhancing the cycling performance of the battery.

In some embodiments, when the oxide positive electrode active substance (for example, a lithium transition metal oxide) in the positive electrode active substance has a high nickel content (Q_{Ni} ≥ 0.9, for example, Q_{Ni} = 0.93), an extremely high battery capacity can be achieved while still maintaining good rate performance and cycling performance.

In some embodiments, the positive electrode film provided in this application is well adaptable to multiple different oxide positive electrode active substances (for example, lithium transition metal oxides).

In some embodiments, the positive electrode film provided in this application is well adaptable to multiple different positive electrode solid electrolytes (for example, different sulfide electrolytes), and the assembled solid-state batteries (for example, all-solid-state batteries) exhibit excellent electrochemical performance.

In some embodiments, when a sulfide solid electrolyte with high ionic conductivity is used as the positive electrode solid electrolyte, the electrochemical performance of a solid-state battery (for example, an all-solid-state battery) using only a sulfide solid electrolyte as the positive electrode solid electrolyte is superior to that using only a halide solid electrolyte or a combination of a halide solid electrolyte and a sulfide solid electrolyte.

In some embodiments, the positive electrode film is made into a positive electrode film layer by pressing powder on a solid electrolyte sheet, or made into an independent positive electrode film sheet, and the solid-state batteries (for example, all-solid-state batteries) assembled by both methods exhibit excellent electrochemical performance. There are no restrictions on the forming method of the positive electrode film, all showing good adaptability.

In some embodiments, without using a binder, the positive electrode film is made into a positive electrode film layer by pressing powder on a solid electrolyte sheet, and the assembled solid-state battery (for example, an all-solid-state battery) performs very well.

In this application, unless otherwise specified, the electrochemical performance of a battery generally refers to its overall performance in terms of capacity, rate performance, and cycling performance.

A solid-state battery includes at least one solid-state battery cell. A solid-state battery may include one or more solid-state battery cells.

In this application, unless otherwise specified, a "solid-state battery cell" refers to a basic unit capable of implementing mutual conversion between chemical energy and electrical energy, with all components being in a solid state. In some embodiments, the solid-state battery cell may be an all-solid-state battery cell.

In this application, unless otherwise specified, an "all-solid-state battery cell" refers to a basic unit capable of implementing mutual conversion between chemical energy and electrical energy, with all components being in a solid state.

Without limitation, a solid-state battery cell (which may be an all-solid-state battery cell) may include a positive electrode layer, a solid electrolyte layer, and a negative electrode layer, with the solid electrolyte layer located between the positive electrode layer and the negative electrode layer. During the charging and discharging process of the battery, active ions intercalate and deintercalate back and forth between the positive electrode layer and the negative electrode layer. The solid electrolyte layer conducts ions between the positive electrode layer and the negative electrode layer, and can also isolate the positive electrode layer from the negative electrode layer to prevent short-circuiting between the positive and negative electrodes.

Unless otherwise specified, the positive electrode layer in a solid-state battery (for example, an all-solid-state battery) includes the positive electrode film described in the first aspect of this application. It may consist solely of the positive electrode film described in the first aspect of this application, or the positive electrode layer may be formed by combining the positive electrode film described in the first aspect of this application with other films suitable for the positive electrode.

The following are some descriptions regarding the negative electrode layer.

The negative electrode layer may be provided by a negative electrode plate or a negative electrode film sheet known in the art for use in solid-state batteries (for example, all-solid-state batteries), or the constituent materials of the negative electrode layer may be directly pressed into a negative electrode film layer on one side of the solid electrolyte layer. The negative electrode film sheet may be combined with other films suitable for the negative electrode to obtain a negative electrode plate or a negative electrode layer.

The negative electrode layer can be prepared using a dry method or a wet method. For example, a dry pressing method can be used to prepare the film. For another example, a wet coating method can be used to prepare the film.

The negative electrode layer includes a negative electrode active material layer, the negative electrode active material layer including a negative electrode active substance.

Without limitation, a weight percentage of the negative electrode active substance in the negative electrode active material layer may be ≥80wt%, further may be ≥90wt%.

In some embodiments, the negative electrode active substance is a lithium-indium alloy (InLi alloy).

In some embodiments, the negative electrode layer is an InLi alloy film.

In some embodiments, the negative electrode active substance may alternatively be a negative electrode active substance known in the art for use in solid-state batteries (for example, all-solid-state batteries). In a non-limiting example, the negative electrode active substance may include one or more of the following materials: elemental silicon, elemental tin, silicon-carbon negative electrode, silicon monoxide, graphite, and metallic lithium. However, this application is not limited to these materials or substances, and other conventional materials that can be used as battery negative electrode active substances may also be used. These negative electrode active substances can be used alone or in combination of two or more.

In some embodiments, the negative electrode plate or the negative electrode film sheet may include a negative electrode current collector and a negative electrode active material layer disposed on at least one surface of the negative electrode current collector, the negative electrode active material layer including a negative electrode active substance. In a non-limiting example, the negative electrode current collector has two surfaces facing away from each other in its thickness direction, and the negative electrode active material layer is disposed on either one or both of the two surfaces of the negative electrode current collector facing away from each other. In some embodiments, the negative electrode current collector may be a metal foil or a composite current collector. For example, as a metal foil, copper foil may be used. In the negative electrode current collector, the composite current collector may include a polymer material base layer and a metal layer formed on at least one surface of the polymer material substrate. In the negative electrode current collector, the composite current collector can be obtained by forming a metal material on the polymer material substrate. In the negative electrode current collector, non-limiting examples of the metal material may include one or more of copper, copper alloy, nickel, nickel alloy, titanium, titanium alloy, silver, silver alloy, and the like. In the negative electrode current collector, non-limiting examples of the polymer material substrate may include one or more of polypropylene (PP), polyethylene terephthalate (PET), polybutylene terephthalate (PBT), polystyrene (PS), polyethylene (PE), and the like.

In some embodiments, the negative electrode active material layer optionally includes a negative electrode conductive agent. Without limitation, the negative electrode conductive agent may include one or more of superconducting carbon, acetylene black, carbon black, Ketjen black, carbon dots, carbon nanotubes, graphene, and carbon nanofibers. Without limitation, in the negative electrode active material layer, a weight percentage of the negative electrode conductive agent may be 0-15wt%, further optionally 0-10wt%, still further optionally 0-5wt%.

In some embodiments, the negative electrode active material layer optionally includes a binder (referred to as a negative electrode binder). In a non-limiting example, the negative electrode binder may include, but is not limited to, one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). Without limitation, a weight percentage of the negative electrode binder in the negative electrode active material layer may be 0-10wt%, further may be 0-5wt%, still further may be 1wt%-5wt%, still further optionally 1wt%-3wt%.

In some embodiments, the negative electrode active material layer optionally includes other additives, such as a thickener (for example, sodium carboxymethyl cellulose (CMC-Na)). A weight percentage of the other additives in the negative electrode active material layer may be 0-15wt%, further optionally 0-10wt%, still further optionally 0-5wt%, still further optionally 0-3wt%, still further optionally 0-2wt%.

In some embodiments, the negative electrode plate or the negative electrode film sheet can be prepared as follows: dispersing the components used to prepare the negative electrode plate or the negative electrode film sheet, such as the negative electrode active substance, the negative electrode conductive agent, the binder (that is, the negative electrode binder), and any other components, in a solvent (non-limiting examples of the solvent include N-methylpyrrolidone (NMP)) to produce a negative electrode slurry; and further, applying the negative electrode slurry on at least one surface of the negative electrode current collector, followed by processes such as drying and cold pressing, to obtain the negative electrode plate or the negative electrode film sheet. Cold pressing can be performed using a cold rolling machine. The surface of the negative electrode current collector to which the negative electrode slurry is applied can be a single surface of the negative electrode current collector or both surfaces of the negative electrode current collector. The solid content of the negative electrode slurry may be 30wt% to 70wt%, optionally 40wt% to 60wt%. The viscosity of the negative electrode slurry at room temperature can be adjusted to 2000 mPa·s to 10000 mPa·s, optionally 3000 mPa·s to 10000 mPa·s. During application of the negative electrode slurry, the coating weight per unit area (excluding the solvent) may be 75 g/m² to 220 g/m². The compacted density of the negative electrode plate or the negative electrode film sheet may be 1.0 g/cm³ to 2.0 g/cm³, optionally 1.0 g/cm³ to 1.8 g/cm³.

The following are some descriptions regarding the solid electrolyte layer.

The solid electrolyte layer conducts ions between the positive electrode layer and the negative electrode layer, and can also isolate the positive electrode layer from the negative electrode layer to prevent short-circuiting between the positive and negative electrodes.

The solid electrolyte layer includes a solid electrolyte. The solid electrolyte in the solid electrolyte layer may be a solid electrolyte known in the art for use in solid-state batteries (for example, all-solid-state batteries). In a non-limiting example, the solid electrolyte in the solid electrolyte layer may include one or more of the following materials: sulfide solid electrolyte, halide solid electrolyte, oxide solid electrolyte, polymer solid electrolyte, and the like. The type of the sulfide solid electrolyte in the solid electrolyte layer may be the same as or different from the sulfide solid electrolyte in the positive electrode layer (for example, the foregoing positive electrode film).

In another non-limiting example, the positive electrode solid electrolyte and the solid electrolyte in the solid electrolyte layer may each independently include, but are not limited to, one or more of oxide solid electrolyte, sulfide solid electrolyte, and halide solid electrolyte. In some embodiments, the positive electrode solid electrolyte and the solid electrolyte in the solid electrolyte layer may each independently include, but are not limited to, one or more of Argyrodite-type sulfide electrolyte and halide electrolyte. Non-limiting examples of the oxide solid electrolyte may include one or more of a LISICON-type oxide electrolyte (for example, γ-Li₃PO₄), a NASICON-type oxide electrolyte (for example, Li₁₊ₓAlₓGe₂₋ₓ(PO₄)₃ or Li₁₊ₓAlₓTi₂₋ₓ(PO₄)₃, where 0 ≤ x ≤ 1), Garnet-type (for example, Li₇La₃Zr₂O₁₂), Perovskite (Perovskite)-type oxide electrolyte (for example, Li₃ₓLa_{2/3-x}TiO₃, where 0 ≤ x ≤ 0.5), and the like. Non-limiting examples of the sulfide solid electrolyte may include one or more of Li₁₀GeP₂S₁₂, Li₂S-P₂S₅, Argyrodite type (for example, Li₆PS₅Cl or Li_{5.5}PS_{5.5}Cl_{1.5}), and the like. Non-limiting examples of the halide solid electrolyte may include one or more of Li₃InCl₆, Li₃YCl₆, Li₃ScCl₆, Li₃ErCl₆, Li₂ZrCl₆, and the like.

In some embodiments, the solid electrolyte layer may be formed by pressing a solid electrolyte material into a solid electrolyte film.

In some embodiments, a thickness of the solid electrolyte layer may be 0.1 µm to 1000 µm, optionally 10 µm to 100 µm, 100 µm to 800 µm, 500 µm to 800 µm, or the like.

Without limitation, the positive electrode film, solid electrolyte film, and negative electrode film can be stacked in sequence, with the solid electrolyte placed between the positive electrode film and the negative electrode film, followed by hot rolling, to obtain an all-solid-state cell.

In some embodiments, the solid-state battery cell includes a solid-state cell. In some embodiments, the solid-state cell is an all-solid-state cell.

In some embodiments, the all-solid-state battery cell includes an all-solid-state cell.

In some embodiments, the solid-state cell (for example, an all-solid-state cell 52) includes a positive electrode layer 200, a solid electrolyte layer 100, and a negative electrode layer 300 stacked in sequence. One example is shown in FIG. 5. Unless otherwise specified, the positive electrode layer 200 includes the positive electrode film 20.

In some embodiments, the solid-state cell (for example, an all-solid-state cell 52) includes a positive electrode layer 200, a solid electrolyte layer 100, and a negative electrode layer 300 stacked in sequence, where the positive electrode layer 200 includes the positive electrode film 20, and the positive electrode film 20 includes a positive electrode current collector 210 and positive electrode active material layers 220 disposed on two sides of the positive electrode current collector 210, with a positive electrode active material layer 220 disposed between the positive electrode current collector 210 and the solid electrolyte layer 100. One example is shown in FIG. 6.

In some embodiments, the solid-state battery (for example, an all-solid-state battery) may include an outer packaging. This outer packaging may be used to package the solid-state cell (for example, an all-solid-state cell).

In some embodiments, the outer packaging of the solid-state battery (for example, an all-solid-state battery) may be a hard shell, such as a hard plastic shell, an aluminum shell, a steel shell, or the like. The outer packaging of the solid-state battery (for example, an all-solid-state battery) may alternatively be a soft pouch, such as a pouch-type soft pouch. A material of the soft pouch may be plastic. Further, non-limiting examples of the plastic may include one or more of polypropylene, polybutylene terephthalate, and polybutylene succinate, and the like.

A solid-state battery includes at least one solid-state battery cell. The solid-state battery may include one or more solid-state battery cells.

An all-solid-state battery includes at least one all-solid-state battery cell. The all-solid-state battery may include one or more all-solid-state battery cells.

This application does not impose particular restrictions on a shape of the solid-state battery cell (for example, an all-solid-state battery cell), which may be cylindrical, rectangular, or any other shape. For example, FIG. 7 is an all-solid-state battery cell 5 with a rectangular structure as an example.

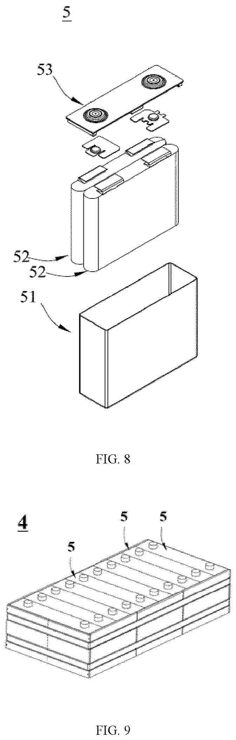

In some of these embodiments, referring to FIG. 8, the outer packaging may include a housing 51 and a cover plate 53. The housing 51 may include a bottom plate and side plates connected to the bottom plate, where the bottom plate and the side plates enclose an accommodating cavity. The housing 51 has an opening communicating with the accommodating cavity, and the cover plate 53 can cover the opening to seal the accommodating cavity. The solid-state cell (for example, the all-solid-state cell 52) is packaged within the accommodating cavity. The solid-state battery cell may contain one or more solid-state cells (for example, the all-solid-state battery cell 5 contains one or more all-solid-state cells 52), and the specific quantity can be selected by those skilled in the art according to actual needs.

The solid-state battery (for example, an all-solid-state battery) may be a battery module 4 or a battery pack 1.

The battery module includes at least one solid-state battery cell (for example, an all-solid-state battery cell). The battery module may contain one or more solid-state battery cells (for example, all-solid-state battery cells), and those skilled in the art can choose an appropriate quantity based on the application and capacity of the battery module.

FIG. 9 shows a battery module 4 as an example. Referring to FIG. 9, in the battery module 4, multiple solid-state battery cells (for example, all-solid-state battery cells 5) can be arranged sequentially along a length direction of the battery module 4. Certainly, they can also be arranged in any other manner. Further, the multiple solid-state battery cells (for example, all-solid-state battery cells 5) can be fixed using fasteners.

Optionally, the battery module 4 may further include a housing having an accommodating space, and multiple solid-state battery cells (for example, all-solid-state battery cells 5) are accommodated in this accommodating space.

In some embodiments, the battery module can also be assembled into a battery pack. The battery pack may contain one or more battery modules, and those skilled in the art can choose an appropriate quantity based on the application and capacity of the battery pack.

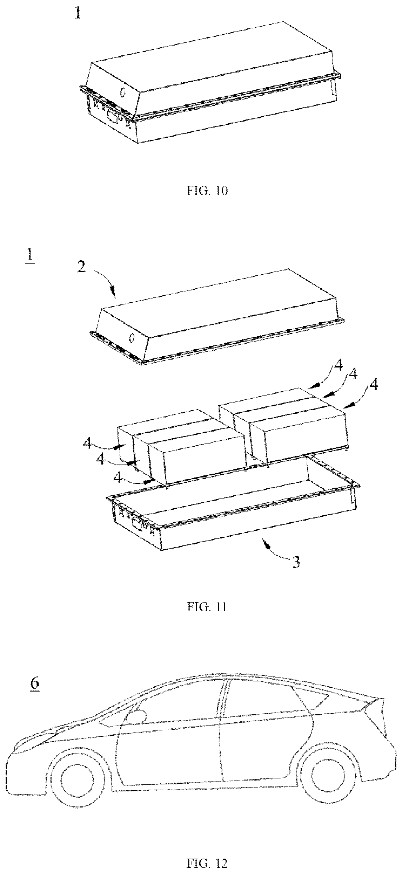

FIG. 10 and FIG. 11 show a battery pack 1 as an example. Referring to FIG. 10 and FIG. 11, the battery pack 1 may include a battery box and multiple battery modules 4 disposed within the battery box. The battery box includes an upper box body 2 and a lower box body 3, where the upper box body 2 is capable of covering the lower box body 3 to form a closed space for accommodating the battery modules 4. The multiple battery modules 4 can be arranged in any manner within the battery box.

In some embodiments, the electric apparatus includes a solid-state battery (for example, an all-solid-state battery) provided in any embodiment of this application.

Without limitation, the solid-state battery (for example, an all-solid-state battery) may be used as a power source for the electric apparatus, or may be used as an energy storage unit for the electric apparatus. The electric apparatus may include a mobile device, an electric vehicle, an electric train, a ship, a satellite, an energy storage system, and the like, but is not limited thereto. The mobile device may be, for example, a mobile phone or a laptop; and the electric vehicle may be, for example, a battery electric vehicle, a hybrid electric vehicle, a plug-in hybrid electric vehicle, an electric bicycle, an electric scooter, an electric golf cart, an electric truck, an electric motorcycle, or an electric tool, but is not limited thereto. The electric apparatus may also be used in military equipment, aerospace, and other fields, as well as in energy storage systems for hydroelectric, thermal, wind, and solar power stations.

For an electric apparatus, the solid-state battery (for example, an all-solid-state battery) can be selected based on its usage requirements.

FIG. 12 is an example of an electric apparatus 6. The electric apparatus is a battery electric vehicle, a hybrid electric vehicle, a plug-in hybrid electric vehicle, or the like. To meet the high power and high energy density requirements of the electric apparatus for the solid-state battery (for example, an all-solid-state battery), a battery pack or a battery module can be used.

In another example, the apparatus may be a mobile phone, a tablet, a laptop, or the like. The apparatus is typically required to be thin and light, and a solid-state battery (for example, an all-solid-state battery) can be used as a power source.

The following describes some embodiments of this application. The embodiments described below are exemplary, intended only to explain this application, and should not be construed as limiting this application. Where technical or conditional details are not specified in the embodiments, they are performed according to the descriptions above, or according to technical or conditional details described in the literature in the field, or according to product specifications. Reagents or instruments used without specifying the manufacturer are conventional products available commercially or can be synthesized from commercially available products using conventional methods. For example, the Se/Te composite involved is prepared as follows: weighing Se powder and Te powder according to a stoichiometric ratio, vacuum-sealing them in a quartz tube with a vacuum degree of approximately 10⁻⁵ (Torr) Torr, and performing heating at 900°C to obtain a uniformly mixed melt, and quenching the melt in ice water to obtain a Se/Te composite (selenium-tellurium alloy) with a specific atomic ratio.

Unless otherwise specified, in the following examples and comparative examples, raw materials with the same chemical formula come from the same synthesis batch or the same product code, or are prepared according to the same stoichiometric ratio and the same method.

In the following examples, a room temperature refers to 20°C to 30°C.

### Dᵥ50 testing:

In the following examples and comparative examples, the Dᵥ50 of the positive electrode active substance, sulfide solid electrolyte, and non-carbon conductive substance is tested and confirmed as follows: Equipment model: MasterSizer 2000 (MasterSizer 2000) laser particle size analyzer. Reference standard procedure: GB/T19077-2016/ISO 13320:2009. Detailed testing procedure: An appropriate amount of the sample under test (with the sample concentration ensuring 8%-12% (w/v) opacity) was taken, 20 mL of solvent (for example, p-xylene or deionized water) was added, external ultrasonication was performed for 5 minutes (53 kHz/120 W) to ensure full dispersion of the sample, and then the sample was determined according to the standard GB/T19077-2016/ISO 13320:2009. Those skilled in the art can understand that for testing involving the sulfide solid electrolyte, if a solvent is involved, unless otherwise specified, reference can be made to the organic solvent for the positive electrode slurry, such as p-xylene.

It should be noted that in the following implementations and examples, an all-solid-state battery is used as a non-limiting example of a solid-state battery, and a lithium transition metal oxide is used as a non-limiting example of an oxide positive electrode active substance.

### Example 1

### (1) Preparation of positive electrode film sheet (as positive electrode plate):

The raw materials of the positive electrode active substance LiNi_{0,83}Co_{0.12}Mn_{0.05}O₂ (with Dᵥ50 of 4 µm), sulfide solid electrolyte Li₆PS₅Cl (with Dᵥ50 of 1 µm), Se powder (with Dᵥ50 of approximately 50 nm), and binder polytetrafluoroethylene (PTFE) were weighed in a mass ratio of 85:12:2:1, and mixed to uniformity in a double-planetary mixer. Then the uniformly mixed powder was heated and pressed in a kneader to produce a dough-like material. The mixture was subsequently hot-rolled at 80°C to prepare a self-supporting positive electrode sheet, which was finally laminated with a current collector aluminum (Al) foil through hot rolling to obtain the positive electrode plate. The resulting positive electrode active material layer is located on one side of the positive electrode film sheet, where the aluminum foil has a thickness of approximately 12 µm, and the positive electrode film sheet has a thickness of 100 µm.

### (2) Solid electrolyte film sheet (as solid electrolyte layer):

100 mg of sulfide solid electrolyte Li₆PS₅Cl was weighed, added to a battery mold, and pressed to obtain an electrolyte sheet with a thickness of 600 µm.

### (3) Negative electrode film sheet (as negative electrode plate):

The InLi alloy film was selected as the negative electrode film sheet.

### (4) Assembly of all-solid-state battery:

The positive electrode film sheet was stacked on one side of the solid electrolyte sheet, and the InLi alloy film was stacked as the negative electrode film sheet on the other side, followed by pressing at 360 MPa, to assemble into the all-solid-state battery.

In Examples 2 to 23, the all-solid-state batteries were prepared using substantially the same method as Example 1. The differences are shown in Tables 1 to 3, with one or more of the following parameters varying: composition of the positive electrode conductive agent (including type of non-carbon conductive substance, Dᵥ50 of non-carbon conductive substance, weight percentage of non-carbon conductive substance in positive electrode active material layer, weight percentage of carbon conductive substance relative to non-carbon conductive substance, weight percentage of carbon conductive substance in positive electrode active material layer, and type of carbon conductive substance), composition of the positive electrode solid electrolyte (including type of sulfide solid electrolyte, Dᵥ50 of sulfide solid electrolyte, and weight percentage of sulfide solid electrolyte in positive electrode active material layer), composition of the positive electrode active substance (including type of lithium transition metal oxide, Dᵥ50 of lithium transition metal oxide, and weight percentage of lithium transition metal oxide in positive electrode active material layer), and type of positive electrode film (positive electrode film layer or positive electrode film sheet).

### Example 24: Forms of positive electrode film layer

The positive electrode active substance LiNi_{0.83}Co_{0.12}Mn_{0.05}O₂ (with Dᵥ50 of 4 µm), sulfide solid electrolyte Li₆PS₅Cl (with Dᵥ50 of 1 µm), and Se powder (with Dᵥ50 of approximately 50 nm) were mixed to uniformity in a mass ratio of 85:12:2 to obtain composite positive electrode powder. During the assembly of the all-solid-state battery, the composite positive electrode powder was sprinkled on one side of the solid electrolyte sheet, followed by pressing, to obtain the positive electrode film layer. Then the InLi alloy was placed on the other side of the solid electrolyte, followed by pressing at 360 MPa, to obtain the all-solid-state battery. The remaining testing methods are the same as in Example 1.

Comparative Examples 1 to 4 were prepared using substantially the same method as Example 1, with the difference being that the non-carbon conductive substance was replaced with different amounts of carbon conductive substance carbon black Super P.

Comparative Example 5 was prepared using substantially the same method as Example 1, with the difference being that the non-carbon conductive substance was replaced with different amounts of carbon conductive substance carbon nanotubes.

**Table 1**

| Number | Type of positive electrode film | Non-carbon conductive substance | | | | Carbon conductive substance | | |
|---|---|---|---|---|---|---|---|---|
| | Film sheet or film layer | Type | Dᵥ50 | Weight percentage of element Te in non-carbon conductive substance | Weight percentage in positive electrode active material layer | Type | Weight percentage relative to non-carbon conductive substance (w/w) | Weight percentage in positive electrode active material layer |
| Example 1 | Film sheet | Elemental Se | ~50 nm | 0 | 2% | / | 0 | 0 |
| Example 2 | Film sheet | Elemental Te | ~50 nm | 100% | 2% | / | 0 | 0 |
| Example 3 | Film sheet | Se/Te composite, Se_{0.6}Te_{0.4} | ~50 nm | 52% | 2% | / | 0 | 0 |
| Example 4 | Film sheet | Se/Te composite, Se_{0.3}Te_{0.7} | ~50 nm | 79% | 2% | / | 0 | 0 |
| Example 5 | Film sheet | Elemental Se + elemental Te, with a weight ratio of 1:1 | ~50 nm | 50% | 2% | / | 0 | 0 |
| Example 6 | Film sheet | Elemental Se + elemental Te, with a weight ratio of 3:7 | ~50 nm | 70% | 2% | / | 0 | 0 |
| Example 7 | Film sheet | Elemental Se | ~100 nm (98 nm) | 0 | 2% | / | 0 | 0 |
| Example 8 | Film sheet | Elemental Se | 1 µm | 0 | 2% | / | 0 | 0 |
| Example 9 | Film sheet | Elemental Se | 5 µm | 0 | 2% | / | 0 | 0 |
| Example 10 | Film sheet | Elemental Se | 20 µm | 0 | 2% | / | 0 | 0 |
| Example 11 | Film sheet | Elemental Se | Same as Example 1 | 0 | 0.5% | / | 0 | 0 |
| Example 12 | Film sheet | Elemental Se | Same as Example 1 | 0 | 5% | / | 0 | 0 |
| Example 13 | Film sheet | Elemental Se | Same as Example 1 | 0 | 10% | / | 0 | 0 |
| Example 14 | Film sheet | Elemental Se | Same as Example 1 | 0 | 1.5% | Carbon black Super P | 33% | 0.5% |
| Example 15 | Film sheet | Elemental Se | Same as Example 1 | 0 | 1.5% | Carbon nanotubes | 33% | 0.5% |
| Example 16 | Film sheet | Elemental Se | Same as Example 1 | 0 | 2% | / | 0 | 0 |
| Example 17 | Film sheet | Elemental Se | Same as Example 1 | 0 | 2% | / | 0 | 0 |
| Example 18 | Film sheet | Elemental Se | Same as Example 1 | 0 | 2% | / | 0 | 0 |
| Example 19 | Film sheet | Elemental Se | Same as Example 1 | 0 | 2% | / | 0 | 0 |
| Example 20 | Film sheet | Elemental Se | Same as Example 1 | 0 | 2% | / | 0 | 0 |
| Example 21 | Film sheet | Elemental Se | Same as Example 1 | 0 | 2% | / | 0 | 0 |
| Example 22 | Film sheet | Elemental Se | Same as Example 1 | 0 | 2% | / | 0 | 0 |
| Example 23 | Film sheet | Elemental Se | Same as Example 1 | 0 | 2% | / | 0 | 0 |
| Example 24 | Film layer | Elemental Se | Same as Example 1 | 0 | 2% | / | 0 | 0 |
| Comparative Example 1 | / | / | / | / | 0% | Carbon black Super P | 100%:0 | 2% |
| Comparative Example 2 | / | / | / | / | 0% | Carbon black Super P | 100%:0 | 0.5% |
| Comparative Example 3 | / | / | / | / | 0% | Carbon black Super P | 100%:0 | 5% |
| Comparative Example 4 | / | / | / | / | 0% | Carbon black Super P | 100%:0 | 10% |
| Comparative Example 5 | / | / | / | / | 0% | Carbon nanotubes | 100%:0 | 2% |

**Table 2**

| Number | Sulfide solid electrolyte (first positive electrode solid electrolyte) | | | | Second positive electrode solid electrolyte | | |
|---|---|---|---|---|---|---|---|
| | Type | Chemical formula | Dᵥ50 | Weight percentage in positive electrode active material layer | Type | Chemical formula | Weight percentage in positive electrode active material layer |
| Example 1 | Argyrodite-type | Li₆PS₅Cl | 1 µm | 12% | / | / | / |
| Example 2 | Argyrodite-type | Li₆PS₅Cl | 1 µm | 12% | / | / | / |
| Example 3 | Argyrodite-type | Li₆PS₅Cl | 1 µm | 12% | / | / | / |
| Example 4 | Argyrodite-type | Li₆PS₅Cl | 1 µm | 12% | / | / | / |
| Example 5 | Argyrodite-type | Li₆PS₅Cl | 1 µm | 12% | / | / | / |
| Example 6 | Argyrodite-type | Li₆PS₅Cl | 1 µm | 12% | / | / | / |
| Example 7 | Argyrodite-type | Li₆PS₅Cl | 1 µm | 12% | / | / | / |
| Example 8 | Argyrodite-type | Li₆PS₅Cl | 1 µm | 12% | / | / | / |
| Example 9 | Argyrodite-type | Li₆PS₅Cl | 1 µm | 12% | / | / | / |
| Example 10 | Argyrodite-type | Li₆PS₅Cl | 1 µm | 12% | / | / | / |
| Example 11 | Argyrodite-type | Li₆PS₅Cl | 1 µm | 12% | / | / | / |
| Example 12 | Argyrodite-type | Li₆PS₅Cl | 1 µm | 12% | / | / | / |
| Example 13 | Argyrodite-type | Li₆PS₅Cl | 1 µm | 12% | / | / | / |
| Example 14 | Argyrodite-type | Li₆PS₅Cl | 1 µm | 12% | / | / | / |
| Example 15 | Argyrodite-type | Li₆PS₅Cl | 1 µm | 12% | / | / | / |
| Example 16 | Argyrodite-type | Li₆PS₅Cl | 5 µm | 12% | / | / | / |
| Example 17 | Argyrodite-type | Li₆PS₅Cl | 20 µm | 12% | / | / | / |
| Example 18 | Argyrodite-type | Li₆PS₅Cl | 1 µm | 12% | / | / | / |
| Example 19 | Argyrodite-type | Li₆PS₅Cl | 1 µm | 12% | / | / | / |
| Example 20 | Argyrodite-type | Li₆PS₅Cl | 1 µm | 12% | / | / | / |
| Example 21 | LGPS-type | Li₁₀GeP₂S₁₂ | 1 µm | 12% | / | / | / |
| Example 22 | / | / | / | 0% | Halide electrolyte | Li₃InCl₆ | 12% |
| Example 23 | Argyrodite-type | Li₆PS₅Cl | 1 µm | 8% | Halide electrolyte | Li₃InCl₆ | 4% |
| Example 24 | Argyrodite-type | Li₆PS₅Cl | 1 µm | 12% | / | / | / |
| Comparative Example 1 | Argyrodite-type | Li₆PS₅Cl | 1 µm | 12% | / | / | / |
| Comparative Example 2 | Argyrodite-type | Li₆PS₅Cl | 1 µm | 12% | / | / | / |
| Comparative Example 3 | Argyrodite-type | Li₆PS₅Cl | 1 µm | 12% | / | / | / |
| Comparative Example 4 | Argyrodite-type | Li₆PS₅Cl | 1 µm | 12% | / | / | / |
| Comparative Example 5 | Argyrodite-type | Li₆PS₅Cl | 1 µm | 12% | / | / | / |

**Table 3**

| Number | Lithium transition metal oxide in positive electrode active substance | | | |
|---|---|---|---|---|
| | Type | Chemical formula | Dᵥ50 | Weight percentage in positive electrode active material layer |
| Example 1 | Lithium nickel cobalt manganese oxide | LiNi_{0.83}Co_{0.12}Mn_{0.05}O₂ | 4 µm | 85% |
| Example 2 | Lithium nickel cobalt manganese oxide | LiNi_{0.83}Co_{0.12}Mn_{0.05}O₂ | 4 µm | 85% |
| Example 3 | Lithium nickel cobalt manganese oxide | LiNi_{0.83}Co_{0.12}Mn_{0.05}O₂ | 4 µm | 85% |
| Example 4 | Lithium nickel cobalt manganese oxide | LiNi_{0.83}Co_{0.12}Mn_{0.05}O₂ | 4 µm | 85% |
| Example 5 | Lithium nickel cobalt manganese oxide | LiNi_{0.83}Co_{0.12}Mn_{0.05}O₂ | 4 µm | 85% |
| Example 6 | Lithium nickel cobalt manganese oxide | LiNi_{0.83}Co_{0.12}Mn_{0.05}O₂ | 4 µm | 85% |
| Example 7 | Lithium nickel cobalt manganese oxide | LiNi_{0.83}Co_{0.12}Mn_{0.05}O₂ | 4 µm | 85% |
| Example 8 | Lithium nickel cobalt manganese oxide | LiNi_{0.83}Co_{0.12}Mn_{0.05}O₂ | 4 µm | 85% |
| Example 9 | Lithium nickel cobalt manganese oxide | LiNi_{0.83}Co_{0.12}Mn_{0.05}O₂ | 4 µm | 85% |
| Example 10 | Lithium nickel cobalt manganese oxide | LiNi_{0.83}Co_{0.12}Mn_{0.05}O₂ | 4 µm | 85% |
| Example 11 | Lithium nickel cobalt manganese oxide | LiNi_{0.83}Co_{0.12}Mn_{0.05}O₂ | 4 µm | 86.5% |
| Example 12 | Lithium nickel cobalt manganese oxide | LiNi_{0.83}Co_{0.12}Mn_{0.05}O₂ | 4 µm | 82% |
| Example 13 | Lithium nickel cobalt manganese oxide | LiNi_{0.83}Co_{0.12}Mn_{0.05}O₂ | 4 µm | 77% |
| Example 14 | Lithium nickel cobalt manganese oxide | LiNi_{0.83}Co_{0.12}Mn_{0.05}O₂ | 4 µm | 85% |
| Example 15 | Lithium nickel cobalt manganese oxide | LiNi_{0.83}Co_{0.12}Mn_{0.05}O₂ | 4 µm | 85% |
| Example 16 | Lithium nickel cobalt manganese oxide | LiNi_{0.83}Co_{0.12}Mn_{0.05}O₂ | 4 µm | 85% |
| Example 17 | Lithium nickel cobalt manganese oxide | LiNi_{0.83}Co_{0.12}Mn_{0.05}O₂ | 4 µm | 85% |
| Example 18 | Lithium nickel cobalt manganese oxide | LiNi_{0.83}Co_{0.12}Mn_{0.05}O₂ | 6 µm | 85% |
| Example 19 | Lithium nickel cobalt manganese oxide | LiNi_{0.83}Co_{0.12}Mn_{0.05}O₂ | 8 µm | 85% |
| Example 20 | Lithium nickel cobalt manganese oxide | LiNi_{0.93}Co_{0.06}Mn_{0.01}O₂ | 4 µm | 85% |
| Example 21 | Lithium nickel cobalt manganese oxide | LiNi_{0.83}Co_{0.12}Mn_{0.05}O₂ | 4 µm | 85% |
| Example 22 | Lithium nickel cobalt manganese oxide | LiNi_{0.83}Co_{0.12}Mn_{0.05}O₂ | 4 µm | 85% |
| Example 23 | Lithium nickel cobalt manganese oxide | LiNi_{0.83}Co_{0.12}Mn_{0.05}O₂ | 4 µm | 85% |
| Example 24 | Lithium nickel cobalt manganese oxide | LiNi_{0.83}Co_{0.12}Mn_{0.05}O₂ | 4 µm | 85% |
| Comparative Example 1 | Lithium nickel cobalt manganese oxide | LiNi_{0.83}Co_{0.12}Mn_{0.05}O₂ | 4 µm | 85% |
| Comparative Example 2 | Lithium nickel cobalt manganese oxide | LiNi_{0.83}Co_{0.12}Mn_{0.05}O₂ | 4 µm | 85% |
| Comparative Example 3 | Lithium nickel cobalt manganese oxide | LiNi_{0.83}Co_{0.12}Mn_{0.05}O₂ | 4 µm | 85% |
| Comparative Example 4 | Lithium nickel cobalt manganese oxide | LiNi_{0.83}Co_{0.12}Mn_{0.05}O₂ | 4 µm | 85% |
| Comparative Example 5 | Lithium nickel cobalt manganese oxide | LiNi_{0.83}Co_{0.12}Mn_{0.05}O₂ | 4 µm | 85% |

In Tables 1, 2, and 3, Dᵥ50 values are rounded for entry; for approximate values, "~50 nm" indicates 50 ± 1 nm, and "~100 nm" indicates 100 ± 2 nm; for non-approximate values in µm, the deviation is within ±0.2 µm.

### Performance testing and analysis

The electrochemical performance of the positive electrode plates and corresponding all-solid-state batteries was tested using solid-state mold batteries, with a battery test window of 2.8 V to 4.3 V (vs. Li potential).

### 1. Initial discharge capacity

Testing procedure: The assembled all-solid-state battery was charged to 3.68 V (4.3 V vs. Li potential) at a current density of 0.1C, left standing for 10 minutes, and then discharged to 2.18 V (2.8 V vs. Li potential) at 0.1C to obtain the initial discharge capacity of the battery. The battery was tested at 25 ± 3°C, where 1C = 200 mA/g.

### 2. Initial coulombic efficiency

The initial coulombic efficiency was calculated by dividing the initial discharge capacity obtained at 0.1C by the initial charge capacity.

### 3. Rate performance

Testing procedure: The all-solid-state battery was fixed at 0.1C, and discharging was performed at rates of 0.1C, 0.33C, 1C, 2C, and 3C, with 3 cycles at each rate. The voltage test window of the battery was 2.8-4.3 V vs. Li⁺/Li, and the battery was tested at 25 ± 3°C, where 1C = 200 mA/g.

### 4. Cycling performance

Testing procedure: The assembled all-solid-state battery was first activated by performing 3 charge-discharge cycles at 0.1C, and then subjected to long-term cycling at 0.33C for 200 cycles to calculate the cycling capacity retention rate of the battery. The voltage test window of the battery was 2.8-4.3 V vs. Li⁺/Li (vs. Li potential, with Li⁺ as the active ion), and the battery was tested at 25 ± 3°C, where 1C = 200 mA/g. Test results are shown under " Capacity retention rate after 200 cycles at 0.33C" in Table 4.

### Test analysis results

The electrochemical performance test results for the all-solid-state batteries of each example and comparative example are shown in Table 4.

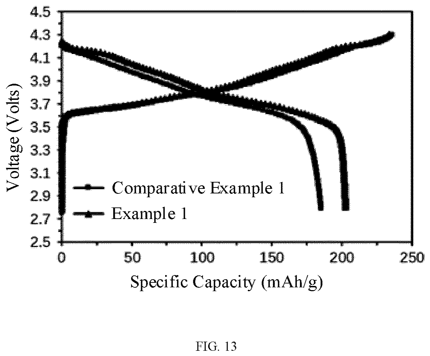

A comparison of the initial charge-discharge curves for Comparative Example 1 and Example 1 is shown in FIG. 13. It can be seen that when the conventional Super P carbon conductive agent is replaced with Se powder, the decomposition of the sulfide electrolyte can be suppressed, and the initial discharge capacity, initial coulombic efficiency, cycling performance, and rate performance of the all-solid-state battery are all significantly improved.

Comparative Examples 1 to 5 all use conventional carbon conductive substances as the positive electrode conductive agent, and compared to Examples 1 to 24, the initial discharge capacity, initial coulombic efficiency, cycling performance, and rate performance of the all-solid-state batteries in Comparative Examples 1 to 5 are significantly worse.

Example 2 uses Te powder with high electronic conductivity as the positive electrode conductive agent, and the assembled all-solid-state battery exhibits excellent electrochemical performance.

In Examples 3 to 6, the non-carbon conductive substance contains both element Se and element Te, and the discharge capacity, rate performance, and cycling performance of the all-solid-state batteries are all significantly improved compared to Comparative Example 1. Due to the synergistic effect between Se and Te, element Se is more likely to bind with peroxide ions to generate SeO₃²⁻, which is more effective in suppressing the decomposition of the sulfide electrolyte. Element Te imparts higher electronic conductivity to the non-carbon conductive substance, providing more robust electron conduction pathways. In this case, when the non-carbon conductive substance is a SeₓTe₁₋ₓ composite or a mixture of Se and Te, the all-solid-state battery exhibits excellent electrochemical performance. Additionally, in the SeₓTe₁₋ₓ composite, Se and Te are bonded at the atomic scale. The combined use of the two elements exhibits excellent effects.

In Examples 14 and 15, a small amount of carbon conductive substance (second conductive substance) is added in addition to the non-carbon conductive substance, and the all-solid-state battery still maintains good electrochemical performance, far superior to that of an all-solid-state battery using only carbon conductive substance as the positive electrode conductive agent (for example, Comparative Example 5). Furthermore, when the second conductive substance is used, carbon nanotubes, with their elongated shape, have a relatively small contact area with the sulfide solid electrolyte. Using carbon nanotubes as the second conductive substance is beneficial for reducing the decomposition of the sulfide solid electrolyte.

In Example 24, the positive electrode film does not contain a binder, and the assembled all-solid-state battery performs very well.

**Table 4**

| Number | Battery performance | | | | | | |
|---|---|---|---|---|---|---|---|
| | 0.1C discharge specific capacity (mAh/g) | Initial coulombic efficiency (%) | 0.33C discharge specific capacity (mAh/g) | 1C discharge specific capacity (mAh/g) | 2C discharge specific capacity (mAh/g) | 3C discharge specific capacity (mAh/g) | Capacity retention rate after 200 cycles at 0.33C (%) |
| Example 1 | 202.6 | 86.7 | 194.8 | 175.5 | 160.4 | 149.6 | 94.6 |
| Example 2 | 205.7 | 86.5 | 198.2 | 178.9 | 165.2 | 154.3 | 95.8 |
| Example 3 | 209.5 | 87.9 | 202.4 | 183.3 | 172.8 | 160.6 | 96.8 |
| Example 4 | 212.4 | 88.5 | 205.6 | 186.5 | 176.9 | 165.3 | 97.2 |
| Example 5 | 207.4 | 87.3 | 200.1 | 181.6 | 169.3 | 158.7 | 96.4 |
| Example 6 | 210.3 | 88 | 203.2 | 184.5 | 172.6 | 161.9 | 96.9 |
| Example 7 | 197.8 | 86.3 | 188.3 | 167.2 | 153.2 | 140.3 | 92.5 |
| Example 8 | 194.6 | 85.8 | 185.1 | 163.7 | 149.6 | 136.8 | 91.3 |
| Example 9 | 190.3 | 85.4 | 181.4 | 159.5 | 145.3 | 132.6 | 88.7 |
| Example 10 | 187.5 | 84.7 | 177.2 | 155.3 | 140.2 | 127.4 | 85.5 |
| Example 11 | 192.4 | 86.3 | 183.5 | 163.8 | 148.6 | 137.2 | 91.5 |
| Example 12 | 195.6 | 86.5 | 186.3 | 165.5 | 153.2 | 140.5 | 92.4 |
| Example 13 | 189.5 | 85.7 | 180.3 | 159.5 | 144.8 | 133.6 | 88.5 |
| Example 14 | 195.6 | 85.3 | 187.3 | 167.7 | 153.6 | 141.2 | 90.5 |
| Example 15 | 198.3 | 86.2 | 190.6 | 171.2 | 156.5 | 145.3 | 91.8 |
| Example 16 | 190.2 | 86.2 | 192.5 | 162.1 | 145.6 | 135.8 | 85.8 |
| Example 17 | 186.3 | 84.3 | 186.6 | 155.4 | 136.8 | 126.5 | 81.4 |
| Example 18 | 198.4 | 86.5 | 190.5 | 171.6 | 155.6 | 145.8 | 95.7 |
| Example 19 | 194.6 | 86.1 | 186.1 | 167.5 | 152.3 | 141.2 | 96.7 |
| Example 20 | 225.6 | 86.8 | 215.3 | 201.8 | 185.7 | 169.4 | 91.2 |
| Example 21 | 201.5 | 86.6 | 193.4 | 174.6 | 158.8 | 147.9 | 94.4 |
| Example 22 | 193.8 | 89.2 | 185.4 | 166.3 | 151.2 | 141.3 | 90.2 |
| Example 23 | 197.6 | 87.6 | 189.7 | 171.2 | 155.5 | 146.2 | 92.3 |
| Example 24 | 204.5 | 87.2 | 196.4 | 178.4 | 162.6 | 152.3 | 94.8 |
| Comparative Example 1 | 185.2 | 78.6 | 172.3 | 150.6 | 128.5 | 102.4 | 72.1 |
| Comparative Example 2 | 180.5 | 81.3 | 166.7 | 145.4 | 123.7 | 97.5 | 78.3 |
| Comparative Example 3 | 182.3 | 76.5 | 169.5 | 147.2 | 125.6 | 99.6 | 70.4 |
| Comparative Example 4 | 175.6 | 72.3 | 161.2 | 140.6 | 128.4 | 92.3 | 65.6 |
| Comparative Example 5 | 190.7 | 80.5 | 177.8 | 155.7 | 133.6 | 110.3 | 78.6 |

The descriptions of the various embodiments and examples above tend to emphasize the differences between the embodiments and examples. For their similarities or identical aspects, reference may be made to each other. For brevity, details are not repeated herein. The technical features of the embodiments and examples described above can be combined in any manner. For conciseness, not all possible combinations of the technical features in the embodiments and examples are described; however, as long as there is no contradiction in these combinations, they should be considered within the scope of this specification. It should be noted that this application is not limited to the embodiments and examples described above. The embodiments and examples are merely illustrative, and any embodiment within the scope of the technical solution of this application that has substantially the same configuration and achieves the same effect as the technical concept is included in the technical scope of this application. The embodiments and examples described above express only a few implementations of this application, and their detailed descriptions should not be construed as limiting the scope of the patent. Furthermore, within the scope of not departing from the gist of this application, various modifications that those skilled in the art can conceive, as well as other configurations constructed by combining some constituent elements of the embodiments or examples, are also included in the scope of this application.

## Claims

1. A positive electrode film, comprising a positive electrode active material layer, the positive electrode active material layer comprising a positive electrode active substance, a positive electrode solid electrolyte, and a positive electrode conductive agent;
wherein the positive electrode active substance comprises an oxide positive electrode active substance, and the positive electrode conductive agent comprises a non-carbon conductive substance, the non-carbon conductive substance comprising at least one of elemental Se, elemental Te, and a Se/Te composite, the Se/Te composite having a chemical formula of SeₓTe₁₋ₓ, wherein 0 < x < 1; and
optionally, the oxide positive electrode active substance comprises a lithium transition metal oxide.

2. The positive electrode film according to claim 1, wherein under at least one temperature or within at least a portion of a temperature range from 20°C to 100°C, under identical test conditions, an electronic conductivity of the non-carbon conductive substance is greater than or equal to an electronic conductivity of elemental Se; and
optionally, at any temperature or within any temperature range from 20°C to 100°C, under identical test conditions, the electronic conductivity of the non-carbon conductive substance is greater than or equal to the electronic conductivity of elemental Se.

3. The positive electrode film according to claim 1 or 2, wherein a weight percentage of element Te in the non-carbon conductive substance is 50wt% to 100wt%.

4. The positive electrode film according to claim 1 or 2, wherein a weight percentage of element Te in the non-carbon conductive substance is 60wt% to 100wt%.

5. The positive electrode film according to any one of claims 1 to 4, wherein the at least one of elemental Se, elemental Te, and a Se/Te composite is denoted as a first conductive substance, and a weight percentage of the first conductive substance in the non-carbon conductive substance is 80wt% to 100wt%.

6. The positive electrode film according to any one of claims 1 to 5, wherein Dᵥ50 of the non-carbon conductive substance is 1 nm to 20 µm; wherein Dᵥ50 represents a particle size at which a cumulative volume distribution percentage of a multi-particle mixture reaches 50%.

7. The positive electrode film according to claim 6, wherein the Dᵥ50 of the non-carbon conductive substance is 10 nm to 5 µm.

8. The positive electrode film according to claim 6, wherein the Dᵥ50 of the non-carbon conductive substance is 10 nm to 1 µm.

9. The positive electrode film according to any one of claims 1 to 8, wherein the weight percentage of the non-carbon conductive substance in the positive electrode active material layer is 0.1wt% to 10wt%.

10. The positive electrode film according to claim 9, wherein a weight percentage of the non-carbon conductive substance in the positive electrode active material layer is 0.5wt% to 5wt%.

11. The positive electrode film according to any one of claims 1 to 10, wherein the positive electrode solid electrolyte comprises a sulfide solid electrolyte.

12. The positive electrode film according to any one of claims 1 to 11, wherein the positive electrode conductive agent comprises or does not comprise a carbon conductive substance, the carbon conductive substance satisfying at least one of the following characteristics:
a weight percentage of the carbon conductive substance relative to the non-carbon conductive substance is Owt% to 50wt%;
a weight percentage of the carbon conductive substance in the positive electrode active material layer is Owt% to 1wt%;
and
the carbon conductive substance comprises one or more of superconducting carbon, acetylene black, carbon black, Ketjen black, carbon dots, carbon nanotubes, graphene, and carbon nanofibers.

13. The positive electrode film according to claim 12, wherein the carbon conductive substance satisfies at least one of the following characteristics:
the weight percentage of the carbon conductive substance relative to the non-carbon conductive substance is Owt% to 33wt%; and
the weight percentage of the carbon conductive substance in the positive electrode active material layer is Owt% to 0.5wt%.

14. The positive electrode film according to any one of claims 11 to 13, wherein the sulfide solid electrolyte comprises at least one of a binary sulfide solid system and a ternary sulfide solid system.

15. The positive electrode film according to claim 14, wherein the sulfide solid electrolyte satisfies at least one of the following characteristics:
the binary sulfide solid system comprises one or more of Li₂S-P₂S₅, Li₂S-SiS₂, Li₂S-GeS₂, and Li₂S-B₂S₃; and
the ternary sulfide solid system comprises one or more of argyrodite-type sulfide electrolyte, Li₂S-MeS₂-P₂S₅ ternary sulfide electrolyte, lithium germanium phosphorus sulfide-type sulfide electrolyte, Li₂S-P₂S₅-MS ternary sulfide electrolyte, Li₂S-P₂S₅-MCl ternary sulfide electrolyte, and thio-LISICON-type sulfide electrolyte; wherein Me comprises one or more elements of Si, Ge, Sn, and Al; and M comprises one or more elements of Ge, Al, Sn, Pb, Sb, Si, and As.

16. The positive electrode film according to any one of claims 11 to 15, wherein Dᵥ50 of the sulfide solid electrolyte is 1 nm to 20 µm; wherein Dᵥ50 represents a particle size at which a cumulative volume distribution percentage of a multi-particle mixture reaches 50%.

17. The positive electrode film according to claim 16, wherein the Dᵥ50 of the sulfide solid electrolyte is 50 nm to 5 µm.

18. The positive electrode film according to any one of claims 11 to 17, wherein a weight percentage of the sulfide solid electrolyte in the positive electrode active material layer is 0.1wt% to 30wt%.

19. The positive electrode film according to claim 18, wherein the weight percentage of the sulfide solid electrolyte in the positive electrode active material layer is 5wt% to 20wt%.

20. The positive electrode film according to any one of claims 1 to 19, wherein the lithium transition metal oxide comprises one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium-rich manganese positive electrode active substance, and modified forms of any of the positive electrode active substances; wherein the lithium-rich manganese positive electrode active substance has a chemical formula of qLi₂MnO₃-(1-q)LiZO₂, wherein Z comprises one or more elements of Ni, Co, Mn, Cr, Fe, Al, Nb, Mo, and Ru, and 0 ≤ q ≤ 1; and the modified forms comprise one or more of doping modification and coating modification.

21. The positive electrode film according to any one of claims 1 to 20, wherein Dᵥ50 of the lithium transition metal oxide is 0.1 µm to 20 µm.

22. The positive electrode film according to claim 21, wherein the Dᵥ50 of the lithium transition metal oxide is 1 µm to 10 µm.

23. The positive electrode film according to any one of claims 1 to 22, wherein a weight percentage of the lithium transition metal oxide in the positive electrode active material layer is 70wt% to 99wt%.

24. The positive electrode film according to claim 23, wherein the weight percentage of the lithium transition metal oxide in the positive electrode active material layer is 80wt% to 95wt%.

25. The positive electrode film according to any one of claims 1 to 24, wherein a thickness of the positive electrode active material layer is 30 µm to 400 µm.

26. The positive electrode film according to claim 25, wherein the thickness of the positive electrode active material layer is 60 µm to 130 µm.

27. The positive electrode film according to any one of claims 1 to 26, wherein the positive electrode film comprises a positive electrode current collector and the positive electrode active material layer, the positive electrode active material layer being located on at least one side of the positive electrode current collector.

28. A positive electrode active material layer, wherein the positive electrode active material layer is the positive electrode active material layer in the positive electrode film according to any one of claims 1 to 26.

29. A positive electrode film sheet, comprising a positive electrode current collector and a positive electrode active material layer disposed on at least one side of the positive electrode current collector, wherein the positive electrode active material layer is the positive electrode active material layer in the positive electrode film according to any one of claims 1 to 26.

30. A solid-state battery, comprising at least one of the positive electrode film according to any one of claims 1 to 27 and the positive electrode film sheet according to claim 29.

31. An all-solid-state battery, comprising at least one of the positive electrode film according to any one of claims 1 to 27 and the positive electrode film sheet according to claim 29.

32. An electric apparatus, comprising at least one of the solid-state battery according to claim 30 and the all-solid-state battery according to claim 31.

33. An application of the positive electrode film according to any one of claims 1 to 27 as a positive electrode film sheet in preparation of an all-solid-state secondary battery or as a positive electrode film layer in a solid-state secondary battery, or an application of the positive electrode film sheet according to claim 29 in preparation of a solid-state secondary battery; and
optionally, the solid-state secondary battery is an all-solid-state secondary battery.

34. An application of a non-carbon conductive substance as a conductive agent in a positive electrode layer of a solid-state battery, wherein the positive electrode layer of the solid-state battery comprises the positive electrode film according to any one of claims 1 to 27, and the non-carbon conductive substance is the non-carbon conductive substance in the positive electrode film; and
optionally, the solid-state battery is an all-solid-state battery.
